# EUROPEAN PATENT SPECIFICATION

(11) **EP 0 999 633 B1**
(45) Date of publication and mention of the grant of the patent: **20.01.2010**
(21) Application number: 99660172.0
(22) Date of filing: 01.11.1999
(51) Int. Cl.: H02H 7/26, H02H 1/00

(54) **Earth-fault protection for electricity network**
Fehlerstromschutz in einem elektrischen Verteilernetz
Protection contre les courants de défaut à la terre dans un réseau de distribution électrique

(30) Priority: 02.11.1998 FI 982375
(43) Date of publication of application: 10.05.2000
(73) Proprietor: ABB Oy, 00380 Helsinki (FI)
(72) Inventor: Linqvist, Grels, 65100 Vaasa (FI); Nymark, Kaj, 65100 Vaasa (FI); Kuisti, Harri, 65350 Vaasa (FI); Lehtonen, Niko, 65320 Vaasa (FI)
(74) Representative: Peltonen, Antti Sakari

(56) References cited:
- DE-A- 4 413 068
- US-A- 5 488 532

## Description

### BACKGROUND OF THE INVENTION

The invention relates to earth-fault protection of an electricity network and particularly to identifying and treating of restriking earth faults.

Several different types of earth faults occur in the electricity distribution network. Some of the faults establish a connection with a relatively stable fault resistance between a phase conductor and the earth. In underground systems such faults are usually permanent and require disconnection of the faulty cable section from the network. On the overhead lines electric arc faults are very frequent. These can be eliminated by releasing the line for a while. Regardless of whether the faults are permanent or electric arc faults, they can be identified and eliminated from the network by using the generally known technique of protective relays.

Earth faults which disappear by themselves are also very frequent in the overhead line network, but these do not require relay functions. The proportion of such faults is particularly high in networks earthed with a Petersen coil, but they also occur in networks the star point of which is unearthed or earthed with a high resistance.

The third type of earth faults is called a 'restriking earth fault' where the earth contact alternately occurs and disappears causing a long-lasting fault in the network if the faulty line section is not disconnected from the network. Restriking earth faults usually occur in connection with damaged insulators. For example, there may be a hole in the insulator of an underground cable where breakdowns occur successively. Between the breakdowns the earth contact disappears. Restriking earth faults are common particularly in networks earthed with a Petersen coil where the probability that the earth faults disappear by themselves is high. These as well as momentary faults may also occur in networks the star point of which is unearthed or earthed with a high resistance.

Conventional earth-fault protection and fault detectors are designed for ordinary earth faults of the first type, not for restriking earth faults. The conventional earth-fault relaying and fault detectors operate randomly in connection with restriking earth faults: either the devices are not activated at all or they are activated but they reset without ever operating. Relays may also operate unselectively, i.e. the relay of a healthy line trips without cause. Furthermore, a conventional fault detector may give unreliable information in the case of restriking earth faults.

In addition to the conventional earth-fault protection, there are earth-fault relays in use the operation of which is based on the initial transients of the voltages and currents related to the emergence of an earth fault with a constant fault resistance. Such relays are not designed for restriking earth faults which have constantly recurring voltage and current transients.

Restiking faults occur in places where insulation of cables and cable terminal boxes or cable joints is damaged due to mechanical stress, material failure or ageing. In that case restriking earth faults often appear as unselective relay functions and unreliable information from fault detectors. Particularly in networks earthed with a Petersen coil, a restriking earth fault can, for example, maintain the zero voltage so high that the station or busbar-specific conventional zero voltage relay or zero current relay serving as back-up protection against earth faults releases the busbar of the whole substation. Another kind of unselective earth-fault protection may also exist.

The reason for unselective relay functions and unreliable information from the fault detector often remains unclear if there are no fault recorders at the substation which store the curve shapes of currents and voltages for post-analysis. The restriking earth fault may seemingly disappear if the line is released for a while. The reason for this is that ionization caused by breakdowns disappears when the line is dead. This makes it even more difficult to find out the reason for unselective functions caused by the restriking earth fault.

Since ordinary earth faults are always permanent in the underground system, reclosings are not usually made in connection with faults in the underground system. In restriking earth faults, release of a line for a while may restore the insulating capacity of the faulty section of a cable insulator for a long time, and thus reclosing is a potentially useful measure in connection with restriking earth faults. If it succeeds, it will provide more time for locating the fault more accurately by other means, such as radio interference measurements or fault detectors. This also allows to change the faulty cable section in such a manner and at such a time that the inconvenience caused by interruptions in distribution can be minimized. The conventional earth-fault protection cannot, however, distinguish between a restriking earth fault and an ordinary earth fault, and consequently reclosing cannot be applied to restriking earth faults.

The prior art solutions utilize the same device or algorithm for identifying both conventional and restriking earth faults. The embodiments are based e.g. on a filter which converts short current pulses related to the restriking earth fault into a signal the frequency of which is close to the basic frequency and which is treated in the same way as the basic frequency current related to a conventional earth fault. The possibility of a restriking earth fault is not always even considered, but protection and fault detection are often designed for ordinary earth faults only.

Using conventional earth-fault protection and fault detectors, it is impossible to achieve reliable and selective protection and fault detection in restriking earth faults. The phase angle of basic frequency signals formed from the original current peaks by a filter in relation to the phase angle of a polarizing signal is determined by the moments of the current peaks. Current peaks are associated with breakdowns of an insulator. A breakdown is a random phenomenon which may occur at any moment, provided that the instantaneous value of the voltage in the faulty phase is high enough. As a result of this, the conventional directional relay may determine the direction of the fault incorrectly which leads to unselective operation of the protection: the faulty line is not necessarily disconnected from the network, but the protective relay of a healthy line may trip without cause. Fault detectors may also give unreliable information in connection with restriking earth faults.

Since the interval between the breakdowns related to restriking earth faults may vary, it may happen that the conventional earth fault relay is activated and it determines the direction of the fault correctly but resets between the current peaks without ever tripping or giving an alarm. The conventional fault detector may also be activated when a current peak occurs, but it resets between the current peaks.

When conventional earth-fault protection is used, it is not possible to identify the line on which a restriking fault is. The restriking fault may, however, cause unselective functions of the conventional earth-fault protection and thus interruptions in the distribution of electricity. To avoid interruptions it may be necessary to replace all old cable sections and cable terminal boxes or cable joints immediately when it is suspected that restricking earth faults are the reason for unselective relay functions. A restriking earth fault may also emerge in a new underground cable as a result of mechanical stress caused during earth excavation, for instance. In a situation like this it is naturally not useful to replace cables on the basis of their age. Instead, protection and detection devices which identify the faulty line section and disconnect it are needed. A conventional earth-fault protection is described in the document DE 4413068.

### BRIEF DESCRIPTION OF THE INVENTION

The object of the invention is to provide a method and a system implementing the method to eliminate the above-mentioned problems. The objects of the invention are achieved with a method according to independent claim 1. The invention also relates to a system according to independent claim 15 and to a detection apparatus according to independent claim 29. The preferred embodiments of the invention are disclosed in the dependent claims.

The invention is based on the idea that current peaks related to a restriking earth fault are utilized for identifying the fault and determining its direction. Regardless of how the measurements of current peaks related to a restriking earth fault are used for determining the direction of the fault, an earth fault can be identified as restriking and its location determined reliably according to the invention when more than one earth fault detected on the basis of a current pulse indicates that the fault is in a certain part of the network, for example on a certain feeder or on a section of it.

An advantage of the method and system of the invention is that selective earth-fault protection in restriking earth faults enables controlled use of old underground systems. Since different lines may become faulty at very different times, it is not economical to replace the whole underground system at one go only because the system has reached a certain age. The solution of the invention enables to identify and replace a faulty cable. Thus the system can be repaired gradually and the costs distributed over a longer period.

A restriking earth fault becomes worse in the course of time. Breakdowns may first occur less frequently and the fault may seemingly disappear when the line is released. The solution of the invention makes reclosings useful in restriking earth faults of the underground system, too. When the earth fault relay of the invention identifies the fault as a restriking earth fault, it can make reclosings. If the relay identifies the fault as an ordinary permanent earth fault, it will not make reclosings. If the reclosing succeeds, the line can be used as long as breakdowns occur relatively infrequently.

The solution of the invention enables identification of a restriking earth fault already in its initial phase before the faulty line needs to be changed. Having detected a restriking fault on a line, the device of the invention may give an alarm, for example. After this, replacement of the faulty cable section can be planned and timed so that interruption in the distribution of electricity is as short as possible and causes inconvenience to as few customers as possible. At the same time it is possible to try to locate the fault more accurately by other means, such as radio interference measurements.

### BRIEF DESCRIPTION OF THE DRAWINGS

The invention will be described in greater detail by means of preferred embodiments with reference to the attached drawings, in which
Figure 1 shows an example of the sum current of a faulty feeder related to a restriking earth fault in a network earthed with a Petersen coil;
Figure 2 shows an example of the zero voltage related to a restriking earth fault in a network earthed with a Petersen coil;
Figure 3 shows an example of the current of a faulty phase related to a restriking earth fault in a network earthed with a Petersen coil;
Figure 4 shows an example of the voltage of a faulty phase related to a restriking earth fault in a network earthed with a Petersen coil;
Figure 5 is an enlarged view of superimposed curve shapes of Figures 3 and 4 around the first current peak, and
Figure 6 is a diagram of the structure of an electricity distribution network according to a preferred embodiment.

### DETAILED DESCRIPTION OF THE INVENTION

In the following, the operation of the invention will be explained in a medium voltage distribution network. It should be noted, however, that this does not in any way restrict application of the invention to electricity networks of other kinds. For example, the configuration and voltage level of the network may vary.

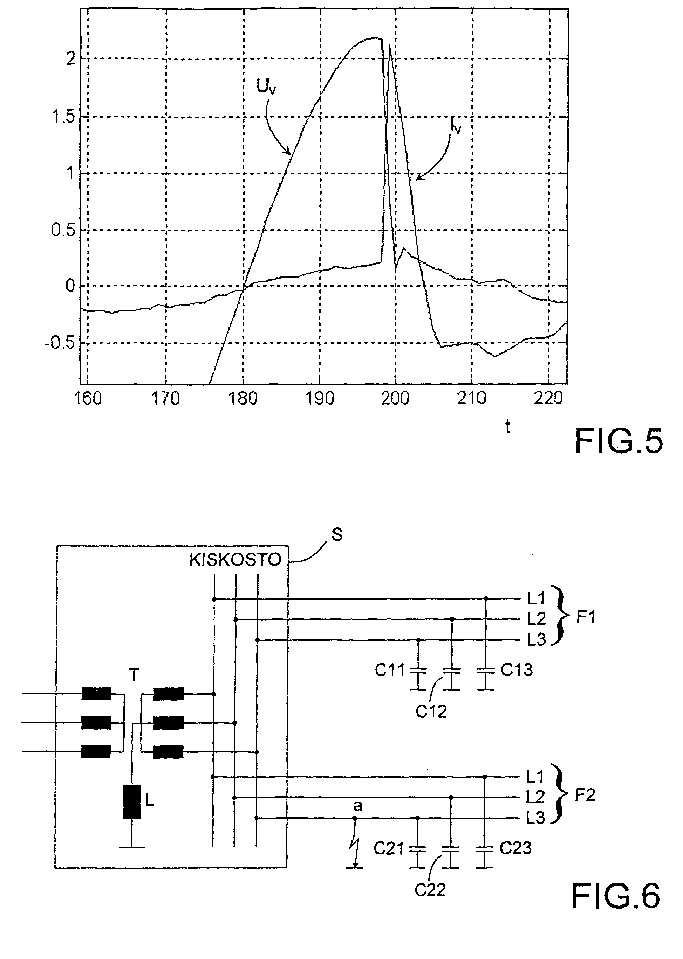

Figure 6 shows a diagram of a typical distribution network. The figure shows only the components that are essential for understanding the invention. The network is fed via a transformer T. The network also comprises a busbar system and two feeders F1 and F2. It should be noted that the network may comprise a random number of feeders. The network consists of three phases L1, L2 and L3. C₁₁, C₁₂ and C₁₃ denote the earth capacitances of the phases of the feeder F1. Correspondingly, C₂₁, C₂₂ and C₂₃ are the earth capacitances of the phases of the feeder F2. The network illustrated in the figure is provided with an earth-fault compensation coil, i.e. with a Petersen coil L. The Petersen coil L is connected between the star point of the transformer and the earth. It is also possible to use a separate earthing transformer or the like for the connection. This is not, however, relevant to the invention. The network could also be isolated from the earth, in which case there would be no coil L. The coil L could also be replaced with a resistance. The figure also shows an earth fault at point a where phase L3 of the feeder F2 is in connection to the earth. The transformer T, coil L and busbar system shown in the figure are typically located at a substation S.

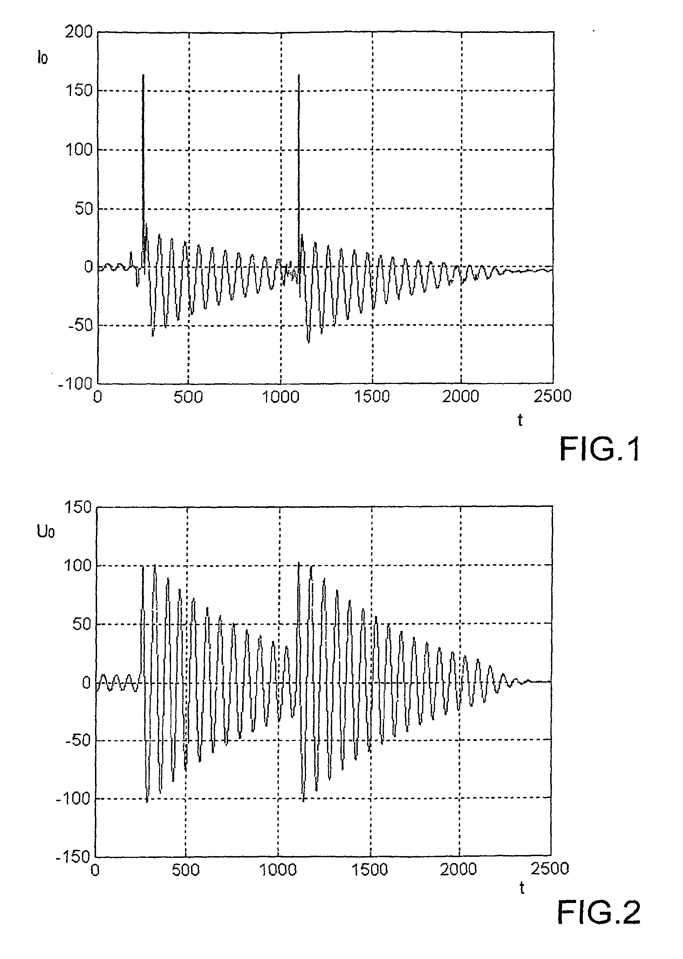

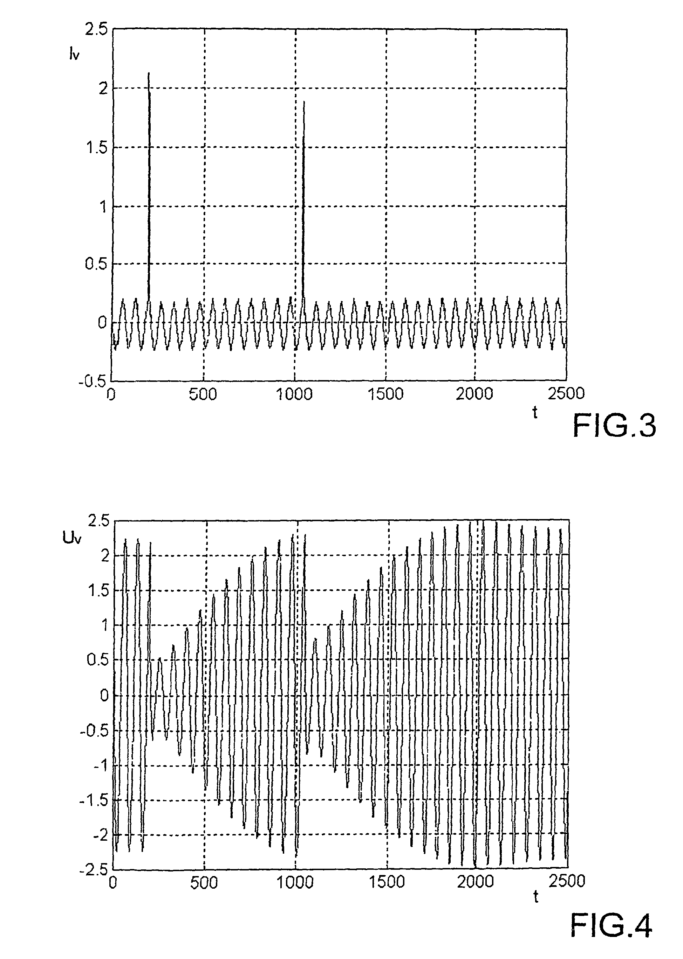

Figure 1 shows an example of the sum current I₀ of a faulty feeder related to a restriking earth fault in a network earthed with a Petersen coil. The current peaks shown are associated with breakdowns. Decreasing oscillation the frequency of which is close to the basic frequency and which follows the peaks represents the capacitive current related to the zero voltage U₀. Figure 2 illustrates an example of the zero voltage U₀ related to a restriking earth fault in a network earthed with a Petersen coil. The amplitude of the zero voltage U₀ increases momentarily always when a breakdown occurs and decreases thereafter. Figure 3 shows an example of the current Iᵥ of a faulty phase related to a restriking earth fault in a network earthed with a Petersen coil. The current peaks shown are associated with breakdowns. Figure 4 illustrates an example of the voltage Uᵥ of a faulty phase related to a restriking earth fault in a network earthed with a Petersen coil. The amplitude of the phase voltage Uᵥ decreases when a breakdown occurs and increases thereafter. Figure 5 is an enlarged view of superimposed curve forms of Figures 3 and 4 around the first current peak. The polarity of the current peak in a faulty phase is the same as the polarity of the phase voltage at that moment. The current Iᵥ and voltage Uᵥ are scaled in the figure so that they both are well visible in the same figure. It should be noted that the curves shown in Figures 1 to 5 are only intended to exemplify the properties of the earth fault phenomenon. Due to the nature of this phenomenon, the curve shapes may vary and differ from those shown in the figures.

In this specification, it is assumed that the zero voltage is the sum of phase voltages, i.e. the voltage between the star point of the network and the earth or a variable derived therefrom. The zero voltage is substantially constant regardless of where it is measured in the network. It is also assumed that the polarity of a current pulse is positive when it moves from the busbar to the feeder F1 or F2. Furthermore, the zero current or the sum current refers to the sum of the phase currents or to a variable derived therefrom at a certain point of the network. The sum current of the feeder or line F1 or F2 means the sum current of the feeder F1 or F2 phases L1, L2 and L3 passing near the access point of the feeder F1 or F2 and the busbar system, or a variable derived therefrom.

The basic idea of the inventive solution is that current peaks related to a restriking earth fault are utilized for identifying a fault and determining its direction. One way is to compare the polarities of the current peaks (or current pulses) with each other or with the sign of the instantaneous value of the voltage in the faulty phase L3. Utilization of the voltage of the faulty phase L3 is based on the fact that on the faulty feeder F2 the polarity of the current peak related to the breakdown is the same as the polarity of the instantaneous value of the voltage in the faulty phase L3 at the moment of the breakdown. On healthy feeders F1 the reference voltage in question is the same as on the faulty feeder F2 but the polarity of the current peak is of the opposite sign; the current pulse moving towards the fault location a on the faulty feeder F2 passes through the earth capacitance C₁₁, C₁₂ and C₁₃ of the healthy feeders F1.

Another way is to compare the current pulses with each other. The comparison can be made between different phases of the same feeder or between different feeders. The polarity of the current pulse of the faulty phase L3 on the faulty feeder F2 is opposite to the polarity of the current pulses of the healthy phases L1 and L2. The current pulse of the faulty phase L3 is also higher than those of the healthy phases L1 and L2. On a short feeder the current pulses of the healthy phases L1 and L2 may be so low that they cannot be distinguished from the normal load current. In the faulty phase L3 of the faulty feeder F2, however, the current pulse is usually higher than the normal load current. Thus protection may be based on the following criterion: if a current peak is detected in one phase which is higher than the current peaks in the other phases, the line in question is faulty.

Regardless of how the measurements of current peaks related to a restriking earth fault are utilized for determining the direction of the fault, the protective relay (not shown) according to the inventive solution trips or gives an alarm when at least a predetermined number of current peaks exceeding a predetermined limit in a predetermined time indicate that the fault is ahead. Because of measurement errors and interference in measurement circuits, it is advantageous to subtract the counter of current peaks if a current peak indicates that there is a fault behind.

It is equally important to ensure selective earth-fault protection of feeders F1 and F2 in restriking earth faults and to prevent unwanted tripping of the zero voltage relay or zero current relay serving as back-up protection (not shown) of the station S. Since the restriking earth fault is a random phenomenon and several different breakdown mechanisms exist, the breakdown frequency varies a lot depending on the fault situation. For this reason, dispersion in the operating times of the protective relays on the feeders F1 and F2 is easily larger than in the case of conventional earth faults. If the reset time of the earth fault relays of the feeders F1 and F2 is too short in relation to the interval between the current pulse, it may happen that the relay of the faulty feeder F2 resets between the current pulses and never trips. On the other hand, the reset time of the earth fault relays on the feeders F1 and F2 should not be too long, either, so that peaks caused in the current signal by interference in the measuring circuits and switching phenomena, for example, do not cause undue trippings.

It is preferable that the activation and reset of the earth fault relays and fault detectors (not shown) on the feeder F1 or F2 are based on the zero voltage: if sufficiently many current pulses have a polarity indicating a fault on the feeder F1 or F2 and the zero voltage is high enough, the device will be activated and remain activated until the zero voltage exceeds the set limit. This way it is possible to prevent reset in a situation where the interval between breakdowns is long. The risk of unselective function of the zero voltage relay serving as back-up protection and the zero current relay of the feed T decreases when the earth-fault protection of the faulty feeder F2 is kept activated on the basis of the same criterion as the back-up protection. Thus it will not happen that the relay of the faulty feeder F2 resets between the current peaks, while the back-up protection of the station S does not, which would lead to unselective operation of the back-up protection.

In the case of restriking earth faults, however, the dispersion in the operating times of the protective relays on the feeders F1 and F2 may be larger than in conventional earth faults, regardless of the criterion for activation and reset. If conventional back-up protection based on the zero voltage relay or zero current relay is used, increase in the dispersion of the operating times of the main protection has to be taken into account by increasing the operating time of the back-up protection. However, this weakens the personnel safety. According to the solution of the invention, the back-up protection finds out either independently by means of the properties of the zero voltage or zero current or on the basis of the messages sent by the earth fault relays of the feeders F1 and F2 that the situation in question is a restriking earth fault and resets between the current peaks.

The solution of the invention allows to distinguish between a restriking earth fault and an ordinary earth fault. Thus the relay may operate differently in various situations and make e.g. reclosings in restriking earth faults. Alternatively, the relay may only inform the operator of a restriking earth fault, and consequently the operator may try to release the line again if it is not desirable to replace the faulty cable at this point. The fault detector utilizing the same method of the invention correspondingly informs the operator of whether the situation in question is a conventional or a restriking earth fault.

A restriking earth fault can be distinguished from a conventional earth fault by identifying current pulses or on the basis of the properties of the zero voltage, for example.

The current peaks related to a restriking earth fault may be very short. Application of the inventive method requires that the device used should be capable of measuring the phenomena described, i.e. it must have a sufficiently high sampling frequency.

The solution of the invention enables location of a restriking earth fault on the feeder F1 and F2 by placing fault detection devices (not shown) capable of determining the direction of a fault along the feeder F1 and F2. These devices employ one of the inventive methods, which may be the same as the method used in the protective relays at the beginning of the feeder F1 and F2. When one fault detector indicates that there is a restriking earth fault ahead and the following fault detector does not indicate anything or indicates that there is a fault behind, then the fault is located on the feeder F1 and F2 between the fault detectors, and it can be located more accurately by other methods. Naturally, communication connections are needed between the detectors and the substation S or the control room (not shown) so that the measurements of the fault detectors could be utilized.

According to a central method of the inventive solution, the polarity of the current peak related to the restriking earth fault is compared with the sign of the instantaneous value of the voltage in phase L3. A typical way of identifying the faulty feeder F2 is to first identify the faulty phase L3 and then to compare the polarity of the current pulse passing the faulty phase L3 with the instantaneous value of the voltage in the faulty phase L3 at the moment of the breakdown. The faulty phase L3 can be identified e.g. by comparing the instantaneous values of the phase currents with their effective values or with basic frequency components. If the instantaneous value of the current divided by the effective value of this current exceeds the set limit in one phase L1, L2 or L3 at some point, this value of the current is interpreted as its peak value. If the peak value of the current in one phase L1, L2 or L3 exceeds the peak value of the other phases, the phase in question is interpreted as faulty.

Another way is to identify the faulty phase L3 on the basis of the voltage magnitude. The voltage of the faulty phase L3 drops at the moment of the breakdown significantly lower than normal, whereas the voltages of the healthy phases L1 and L2 increase significantly higher than normal. However, in this case it is also advantageous to identify the current peak and the moment when it occurs in the above-mentioned manner by comparing the instantaneous value with the effective value, for example.

Instead of the sign of the voltage in the faulty phase L3, the polarity of the current pulse can be compared with the direction of the momentary change in the zero voltage.

It is clear that zero current pulses can be monitored instead of the current pulse of the faulty phase L3 because they both occur at the same moment and have the same polarity. The zero current pulses can also be generated in different ways: e.g. by a cable current transformer arranged around each phase conductor, sum connection of phase-specific current transformers or by digital summing of phase current signals.

Instead of determining the direction of a fault by means of the current pulses and voltage, it is possible to compare the current peaks of different phase currents of each feeder F1 and F2 with each other. In that case voltage measurements are unnecessary, which is advantageous particularly when the fault direction is determined by the fault detectors along the feeder F1 and F2 because voltage measurements are not necessarily in use. However, a disadvantage is that since the voltage measurements are not available, the above-mentioned reset criterion based on the magnitude of the zero voltage cannot be utilized. In the above, we have disclosed a criterion for determining a faulty feeder solely on the basis of the magnitude of the phase current peaks. Another alternative is to compare the polarities of the current peaks of different phases L1, L2 and L3, provided that each phase contains a measurable current peak. If the polarity of the highest current peak is opposite to the polarity of the current peaks of the two other phases, the feeder in question is faulty.

The criterion for determining the direction on the basis of the magnitude of phase current peak values can be complemented with identification of the faulty phase L3 on the basis of voltage measurements. In that case the fault is interpreted as being ahead only if the current peaks are the highest in the phase L1, L2 or L3 which has been determined to be faulty on the basis of the voltage measurements.

If there is a communication connection between the devices (e.g. protective relays) measuring the currents of the different feeders F1 and F2 or between them and another device, it is possible to compare the polarities of the current pulses of the different feeders F1 and F2. The polarity of the current pulses related to a restriking earth fault on the faulty feeder F2 is always opposite to the polarity of the current pulses of the healthy feeders F1. The currents of several different feeders F1 and F2 can also be measured by one device only by connecting the current transformers or current sensors of the different feeders to it.

All the methods described above relate to determining the direction or location of a fault. The method also comprises a step in which the current pulse of the faulty feeder F2 or of the faulty phase L3 is compared to a predetermined threshold value, and the relay trips or gives an alarm if a predetermined number of current peaks exceeding the limit within a predetermined period indicate that the fault is in the protected area.

There are different methods available for preventing the operation of the zero voltage relay or zero current relay serving as back-up protection in restriking earth faults. On the other hand, quick enough operation of the earth-fault protection of the faulty feeder F2 can be ensured by keeping it activated until the zero voltage exceeds a certain limit. This way the faulty feeder F2 can be disconnected from the network before the zero voltage relay serving as back-up protection unselectively trips off the whole busbar and all feeders F1 and F2 connected to it. On the other hand, the operation of the back-up protection can be prevented actively when a restriking earth fault occurs. It is also possible to select a reset criterion for the back-up protection according to which the relay resets between the earth contacts related to a restriking earth fault and does not trip.

An appropriate reset criterion for the zero voltage relay and the zero current relay is, for example, exponential decrease of the amplitude of the zero voltage or zero current between breakdowns (decrease of the zero voltage U₀ is seen in Figure 2). The relay may reset, for example, if the quotient of two successive maximum values is nearly the same and less than one for a set time, i.e. for sufficiently many periods. Exponential decrease of the zero voltage and zero current can be recognized in various other ways, e.g. by calculating the amplitude by a prior art digital filter and by adjusting the amplitude curve to the exponential function using a prior art curve adjustment method, such as the method of least square. If the amplitude curve can be adjusted to the decreasing exponential function so that the square sum of the differences between the points of the curve and the exponential function calculated during a certain period is below the set limit, the protective relay which serves as back-up protection and measures the zero voltage or the zero current of the feed T resets and does not trip.

The other alternative criterion is based on the fact that the frequency of the decreasing zero voltage and zero current often differs from the nominal frequency of the network (e.g. 50 or 60 Hz). The frequency of the decreasing zero voltage and zero current is exactly the same as the nominal frequency only if the inductive reactance of the Petersen coil is accurately adjusted to correspond to the capacitive reactance obtained from the total earth capacitance of the network Cₜₒₜ = C₁₁+C₁₂+C₁₃+C₂₁+C₂₂+C₂₃ at the nominal frequency. This frequency usually differs sufficiently from the nominal frequency (in practice a few hertz) so that the frequency information can be used as the reset criterion. The frequency can be measured by a known frequency estimation method, for example.

If the star point of the network is not earthed at all, decreasing oscillation with a frequency of a few hertz will occur after the breakdown. This frequency is dependent on the nominal frequency of the oscillating circuit formed by the total earth capacitance Cₜₒₜ and the transformers connected between the network phases L1, L2 and L3 and the earth. In that case the reset criterion may also be based on the fact that the frequency differs from the nominal frequency of the network.

If there is a communication connection (e.g. a digital path or a cable transmitting state information) in use between the devices (e.g. protective relays) measuring feeder currents and the protective relay serving as back-up protection of the station S, a feeder-specific device may transmit information on a restriking earth fault detected by it to the back-up protection and prevent unwanted operation thereof.

A restriking earth fault can be distinguished from a conventional earth fault e.g. by comparing the instantaneous values of the phase currents with the effective values of these phase currents or with basic frequency components. Another alternative is to utilize the properties of the zero voltage or zero current as was described above in connection with the reset criteria for the zero voltage relay and zero current relay of the feed.

The most preferred way of identifying a restriking earth fault and a faulty feeder F2 by means of current peaks and voltage measurements is to first identify the faulty phase L3 and then to compare the polarity of the current pulse passing the faulty phase L3 with the instantaneous value of the voltage in the faulty phase L3 when the breakdown occurs. This method is the most reliable one because it is based on the fact that the polarity of the current pulse moving towards the breakdown point is unmistakably dependent on the voltage polarity at the moment of the breakdown. Consequently, if the current pulse and voltage measured at the beginning of the feeder F1 or F2 have the same polarity, the restriking earth fault is undoubtedly on the feeder in question. If the polarities differ from each other, the feeder F1 or F2 in question is healthy and only feeds a restriking earth fault which exists on some other feeder F1 or F2.

It is preferable to employ the magnitudes of the phase voltages for identifying the faulty phase L3. When the voltage suddenly decreases in one phase L1, L2 or L3, the maximum instantaneous value of the current at the moment the phase voltage decreases is chosen as the peak value of the current. To improve reliability, it may be checked that the current peak value found exceeds the effective value of the current or the basic frequency component by a predetermined amount.

The second most preferred way of utilizing the current peaks and voltage measurements is to compare the polarity of a current peak with the momentary change in the zero voltage when the current pulse is generated. This method has as solid a physical basis as the above-mentioned method based on the phase voltage. The zero voltage increases at the same moment as the breakdown occurs. If the polarity of the current pulse measured at the beginning of the feeder F1 or F2 is opposite to the polarity of the momentary change in the zero voltage, the restriking earth fault is undoubtedly on the feeder in question. The problem of this method is that sometimes the sudden change in the zero voltage at the moment of the breakdown is small compared to the absolute value of the zero voltage at the given moment. This is especially the case if the zero voltage decreases slowly between the breakdowns. Thus it may be difficult to determine the direction of change in the zero voltage reliably, especially if the environment interferes with the measuring circuits.

If only comparison of the current peaks of the different feeder F1 or F2 phases L1, L2 or L3 is used for determining the direction of the fault, then the most preferred alternative is to compare only the magnitudes of the current peaks. This method is the best because it can also be used when the fault is on a short feeder, in which case the current peaks of the healthy feeders may be too small to be measurable. A disadvantage of this method is that interference to the measuring circuits may cause a current peak resembling a fault in one phase L1, L2 or L3 and result in unwanted tripping. If the feeders F1 and F2 are so long that the restriking earth fault also causes sufficiently high current peaks in the healthy phases, it is preferable to compare the polarity of the highest phase current peak with the polarities of the simultaneous current peaks of the other phases. In that case the probability that the interference peaks in the measuring circuits cause unwanted tripping is very small, because this would require simultaneous interference peaks of the opposite polarity in the measuring circuits of the other phases.

An advantage of the criteria based solely on the measurements of current peaks is that voltage measurements are not needed.

If the communication connections available enable comparison of the polarities of the current pulses generated by the same breakdown on the different feeders F1 and F2, the faulty feeder F2 can be determined in a very simple and reliable manner. The feeder the current pulse of which has a different polarity than those of the other feeders is faulty. This principle is the most preferred one also because any interference pulses in the current measuring circuit of one relay do not cause unwanted tripping since the method requires that the current pulses pass simultaneously on several feeders F1 and F2.

It is also possible that the same device directly measures the currents of various feeders F1 and F2 and thus identifies the faulty feeder on the basis of the polarities of the current pulses of the different feeders. An advantage of this solution is that there is no need for communication between the devices measuring the currents of the different feeders F1 and F2, nor between these devices and another central device or host device. On the other hand, cables are needed to transmit analog measuring information between the current transformers or current sensors of the different feeders F1 and F2 and the device comparing the currents.

It is also possible to identify a faulty feeder F2 by comparing the magnitudes of the sum current pulses caused by the same breakdown on the different feeders F1 and F2. The feeder the sum current pulse of which is the highest is interpreted as faulty.

To prevent unwanted operation of the zero voltage relay or zero current relay serving as back-up protection, it is preferable to combine different methods. On the other hand, it is recommendable to make the activation of the earth-fault protections of the feeders F1 and F2 dependent on the existing zero voltage so that, having been activated, the protective relay of the faulty feeder F2 does not reset until the zero voltage decreases below a certain limit. This allows to prevent a situation in which the protective relay of the faulty feeder F2 is alternately activated and reset but it never trips. It is, however, advantageous that the zero voltage relay serving as back-up protection or the zero current relay of the feed T resets and does not trip having detected properties related to a restriking earth fault in the zero voltage or zero current. If a communication connection is used, one of the earth fault relays of the feeders F1 or F2 preferably clamps the back-up protection after it has detected a restriking earth fault.

To improve reliability of protection and fault detection it is advantageous to use various combinations of the methods described, in which case the methods complement and back up one another.

In the following, the different embodiments of the invention are reviewed briefly:
1) Principle of selective protection in restriking earth faults: the polarities of the current pulses related to a restriking earth fault are compared with the polarities of the instantaneous values of the voltage in the faulty phase L3 when the current pulses are generated. When the device detects a restriking earth fault on a feeder F1 or F2, the device either gives an alarm or disconnects the feeder.
2) Second principle of selective protection in restriking earth faults:
   the polarities of the current pulses related to a restriking earth fault are compared with the polarities of momentary changes in the zero voltage. When the device detects a restriking earth fault on a feeder F1 or F2, the device either gives an alarm or disconnects the feeder.
3) Third principle of selective protection in restriking earth faults: the polarities of the current pulses of different feeders F1 and F2 are compared utilizing a communication connection between the feeder-specific devices (e.g. protective relays) or between the feeder-specific devices and another device, or by measuring directly the currents of different feeders F1 and F2 by one multi-channel measuring device.
4) Fourth principle of selective protection in restriking earth faults:
   the magnitudes and polarities of the current pulses in different phases L1, L2 and L3 are compared. If at least a certain number of current pulses in one phase are higher than a predetermined limit and higher than in the other phases, the feeder F1 or F2 in question is interpreted as faulty.
5) Fifth principle of selective protection in restriking earth faults: the polarities and magnitudes of the current pulses in different phases L1, L2 and L3 are compared. If at least a certain number of current peaks in one phase are higher than a predetermined limit, higher than in the other phases and have a polarity opposite to the current peaks of the other phases, the feeder F1 or F2 in question is interpreted as faulty.
6) Sixth principle of selective protection in restriking earth faults: the magnitudes of the current peaks in different phases L1, L2 and L3 are compared and the magnitudes of the voltages in different phases are monitored. If at least a certain number of current peaks in one phase are higher than a predetermined limit and higher than in the other phases and if the voltage also decreases in the phase in question, the feeder F1 or F2 in question is interpreted as faulty.
7) Reset criterion based on the zero voltage: if sufficiently many current pulses have a polarity indicating a fault on the feeder F1 or F2, the relay is activated and remains activated until the zero voltage exceeds the set limit. This allows to prevent reset in a situation where the interval between the breakdowns is long. The risk of unselective operation of the zero voltage relay serving as back-up protection decreases when the earth-fault protection of the feeders F1 and F2 is kept activated on the basis of the same criterion as the back-up protection. Thus it will not happen that the relay of the faulty feeder F2 resets between the current peaks but the zero voltage relay does not.
8) Zero voltage relay which serves as back-up protection and detects exponential decrease of the zero voltage and/or deviation of the zero voltage frequency from the nominal frequency (e.g. 50 or 60 Hz) and does not trip even though the magnitude of the zero voltage would exceed the set limit. This principle prevents disconnection of the whole substation S from the network without cause if the protective relay of the feeder F2 does not function quickly enough e.g. because the interval between the breakdowns is too long and the relay resets between the current pulses.
9) Zero current relay which serves as back-up protection and detects exponential decrease of the zero current and/or deviation of the zero current frequency from the nominal frequency (e.g. 50 or 60 Hz) and does not trip even though the magnitude of the zero current would exceed the set limit. This principle prevents disconnection of the whole substation S from the network without cause if the protective relay of the feeder F2 does not function quickly enough e.g. because the interval between the breakdowns is too long and the relay resets between the current pulses.
10) Method of preventing unwanted operation of the zero voltage relay or zero current relay serving as back-up protection utilizing a communication connection: the earth fault relay of the feeder F1 or F2 transmits information on the restriking earth fault detected by it to the back-up protection and prevents unwanted operation of the zero voltage relay.
11) Relay which distinguishes a restriking earth fault from a permanent earth fault and makes reclosings in restriking earth faults but not in permanent earth faults.
12) Relay or fault detector which distinguishes a restriking earth fault from a permanent earth fault and informs the operator of which fault is concerned.
13) Fault detector on the feeder F1 or F2 which, on the basis of measurements, informs the operator of whether the restriking earth fault is located ahead of or behind the measuring point in question. This measuring device employs the same methods as the protective relay at the substation S.
14) Device which on the basis of the information provided by the protective relays and fault detectors on the feeder F1 or F2 determines in which section of the feeder the restriking fault is and informs the operator of the location, or automatically controls the remote-controlled disconnectors of the network so that the faulty feeder section is disconnected.

It is obvious to a person skilled in the art that, as technology advances, the inventive concept can be implemented in various ways. The invention and its embodiments are thus not limited to the examples described above, but may vary within the scope of the claims.

## Claims

1. A protection method of an electricity network against restriking earth faults, which electricity network comprises a star point one or more feeders going out from a supply point and is preferably a three-phase network, the method comprising the steps of:
detecting an earth contact related to an earth fault in the electricity network,
identifying the feeder on which the earth contact occurs by means of current pulses or current pulses and voltage values related to the earth contact, a current value being interpreted as a current pulse at the moment the instantaneous value of the current divided by the effective value of the current exceeds a predetermined limit, **characterized by**
calculating the number of detected earth contacts per each feeder, and
identifying that there is a restriking earth fault on the feeder if the number of the detected earth contacts per said feeder exceeds a predetermined number during a predetermined period, or if the number of the detected earth contacts per said feeder exceeds a predetermined number while the voltage between the star point of the electricity network and the earth, i.e. the zero voltage, remains above a predetermined limit wherein said predetermined number is greater than one.

2. A method according to claim 1, **characterized in that** one is subtracted from the number of the earth contacts detected on a feeder if the number is greater than zero and if an earth contact is detected on another feeder.

3. A method according to claim 1 or 2, **characterized in that** the step for identifying the feeder on which the earth contact occurs comprises the steps of:
identifying the faulty phase,
comparing, feeder specifically, the polarity of the pulse caused by the earth contact of the current in the faulty phase, of the sum current of the phases or of a variable which is in a known phase shift with said currents with the polarity of the instantaneous value of the voltage in the faulty phase or with the polarity of a variable which is in a known phase shift with said voltage at the moment of the earth fault, and
identifying the feeder as faulty if the polarity of the current in the faulty phase or that of the sum current of the phases is the same as the polarity of the instantaneous value of the voltage in the faulty phase.

4. A method according to claim 1 or 2, **characterized in that** the step for identifying the feeder on which the earth contact occurs comprises the steps of:
identifying the faulty phase,
comparing, feeder specifically, the polarity of the pulse caused by the earth contact of he current in the faulty phase or of a variable which is in a known phase shift with said current with the polarity of the momentary change in the zero voltage of the network or in a variable which is in a known phase shift with said zero voltage at the moment of the earth fault, and
identifying the feeder as faulty if the polarity of the current in the faulty phase is opposite to the polarity of momentary change in the zero voltage of the network.

5. A method according to claim 1 or 2, **characterized in that** the step for identifying the feeder on which the earth contact occurs comprises the steps of:
comparing, feeder specifically, the polarity of the pulse caused by the earth contact of the sum current of the phases or of a variable which is in a known phase shift with said sum current with the polarity of the momentary change in the zero voltage of the network or in a variable which is in a known phase shift with said zero voltage at the moment of the earth fault, and
identifying the feeder as faulty if the polarity of the sum current of the phases is opposite to the polarity of momentary change in the zero voltage of the network.

6. A method according to claim 1 or 2, **characterized in that** the step for identifying the feeder on which the earth contact occurs comprises the steps of:
monitoring, feeder specifically, the magnitudes of the pulses caused by the earth contact of the phase currents or of variables which are in a known relation to said currents, and
comparing, feeder specifically, the magnitudes of the pulses caused by the earth contact of the phase currents or of variables which are in a known relation to said currents with each other, and
identifying the feeder as faulty if the current pulse of a feeder phase is higher than a predetermined limit and higher than in the other feeder phases.

7. A method according to claim 1 or 2, **characterized in that** the step for identifying the feeder on which the earth contact occurs comprises the steps of:
monitoring, feeder specifically, the magnitudes of the pulses caused by the earth contact of the phase currents or of variables which are in a known relation to said currents,
comparing, feeder specifically, the magnitudes and polarities of the pulses caused by the earth contact of the phase currents or of variables which are in a known relation to said currents with each other, and
identifying the feeder as faulty if the current pulse of a feeder phase is higher than a predetermined limit, higher than in the other feeder phases and has a polarity opposite to the polarities of the current pulses in the other feeder phases.

8. A method according to claim 1 or 2, **characterized in that** the step for identifying the feeder on which the earth contact occurs comprises the steps of:
monitoring, feeder specifically, the magnitudes of the pulses caused by the earth contact of the phase currents or of variables which are in a known relation to said currents,
comparing, feeder specifically, the magnitudes of the pulses caused by the earth contact of the phase currents or of variables which are in a known relation to said currents with each other, and the magnitudes of the phase voltages or the magnitudes of variables which are in a known relation to said voltages with each other, and
identifying the feeder as faulty if the current pulse of a feeder phase is higher than a predetermined limit, higher than in the other feeder phases and if the voltage of said phase is also smaller than the voltage of the other phases.

9. A method according to claim 1 or 2, **characterized in that** the step for identifying the feeder on which the earth contact occurs comprises the steps of:
comparing the polarities of the pulses caused by the earth contact of the sum currents of the feeder phases or of variables which are in a known phase shift with said sum currents with each other, and
identifying the feeder as faulty if the polarity of the sum current on the feeder is opposite to the polarities of the sum currents on the other feeders.

10. A method according to claim 1 or 2, **characterized in that** the step for identifying the feeder on which the earth contact occurs comprises the steps of:
comparing the magnitudes of the pulses caused by the earth contact of the sum currents of the feeder phases or of variables which are in a known relation to said sum currents with each other, and
identifying the feeder as faulty if the sum current pulse on the feeder is higher than on the other feeders.

11. A method according to any one of claims 1 to 10, **characterized in that** if a back-up earth-fault protection, such as a zero voltage relay or a zero current relay, is used in the electricity network, operation of the back-up earth-fault protection is prevented if a predetermined number of earth contacts are detected in the electricity network within a predetermined period.

12. A method according to any one of claims 1 to 10, **characterized in that** if a back-up earth-fault protection, such as a zero voltage relay or a zero current relay, is used in the electricity network, operation of the back-up earth-fault protection is prevented if the amplitude of the zero voltage in the electricity network or that of the zero current at the supply point decreases substantially exponentially.

13. A method according to any one of claims 1 to 10, **characterized in that** if a back-up earth-fault protection, such as a zero voltage relay or a zero current relay, is used in the electricity network, operation of the back-up earth-fault protection is prevented if the frequency of the zero voltage in the electricity network or that of the zero current at the supply point differs essentially from the nominal frequency of the electricity network.

14. A method according to any one of claims 1 to 13, **characterized in that** reclosings can be made to eliminate a certain earth fault only if the earth fault is identified as a restriking earth fault.

15. A system for protecting an electricity network against restriking earth faults, which electricity network comprises a star point one or more feeders (F1 and F2) going out from a supply point (S) and is preferably a three-phase (L1, L2 and L3) network, the system being arranged to:
detect an earth contact related to an earth fault in the electricity network,
identify the feeder (F2) on which the earth contact occurs by means of current pulses or current pulses and voltage values related to the earth contact, a current value being interpreted as a current pulse at the moment the instantaneous value of the current divided by the effective value of the current exceeds a predetermined limit, **characterized in that** the system is also arranged to:
calculate the number of detected earth contacts per each feeder (F1 and F2), and
identify that there is a restriking earth fault on the feeder (F1 or F2) if the number of the detected earth contacts per said feeder (F1 or F2) exceeds a predetermined number during a predetermined period, or if the number of the detected earth contacts per said feeder (F1 or F2) exceeds a predetermined number while the voltage between the star point of the electricity network and the earth, i.e. the zero voltage, remains above a predetermined limit wherein said predetermined number is greater than one.

16. A system according to claim 15, **characterized in that** the system is arranged to subtract one from the number of the earth contacts detected on a feeder (F1 or F2) if the number is greater than zero and if an earth contact is detected on another feeder (F1 or F2).

17. A system according to claim 15 or 16, **characterized in that** on identifying the feeder (F2) on which the earth contact occurs the system is arranged to:
identify the faulty phase (L3),
compare, feeder (F1 and F2) specifically, the polarity of the pulse caused by the earth contact of the current in the faulty phase (L3), of the sum current of the phases (L1, L2 and L3) or of a variable which is in a known phase shift with said currents with the polarity of the instantaneous value of the voltage in the faulty phase (L3) or with the polarity of a variable which is in a known phase shift with said voltage at the moment of the earth fault, and
identify (F1 or F2) the feeder as faulty if the polarity of the current in the faulty phase (L3) or that of the sum current of the phases (L1, L2 and L3) is the same as the polarity of the instantaneous value of the voltage in the faulty phase.

18. A system according to claim 15 or 16, **characterized in that** on identifying the feeder (F2) on which the earth contact occurs the system is arranged to:
identify the faulty phase (L3),
compare, feeder (F1 and F2) specifically, the polarity of the pulse caused by the earth contact of the current in the faulty phase (L3) or of a variable which is in a known phase shift with said current with the polarity of the momentary change in the zero voltage of the network or in a variable which is in a known phase shift with said zero voltage at the moment of the earth fault, and
identify the feeder (F1 or F2) as faulty if the polarity of the current in the faulty phase (L3) is opposite to the polarity of the momentary change in the zero voltage of the network.

19. A system according to claim 15 or 16, **characterized in that** on identifying the feeder (F2) on which the earth contact occurs the system is arranged to:
compare, feeder (F1 and F2) specifically, the polarity of the pulse caused by the earth contact of the sum current of the phases (L1, L2 and L3) or of a variable which is in a known phase shift with said sum current with the polarity of the momentary change in the zero voltage of the network or in a variable which is in a known phase shift with said zero voltage at the moment of the earth fault, and
identify the feeder (F1 or F2) as faulty if the polarity of the sum current of the phases (L1, L2 and L3) is opposite to the polarity of momentary change in the zero voltage of the network.

20. A system according to claim 15 or 16, **characterized in that** on identifying the feeder (F2) on which the earth contact occurs the system is arranged to:
monitor, feeder (F1 and F2) specifically, the magnitudes of the pulses caused by the earth contact of the phase (L1, L2 and L3) currents or of variables which are in a known relation to said currents, and
compare, feeder (F1 and F2) specifically, the magnitudes of the pulses caused by the earth contact of the phase (L1, L2 and L3) currents or of variables which are in a known relation to said currents with each other, and
identify the feeder (F1 or F2) as faulty if the current pulse in a feeder phase (L1, L2 or L3) is higher than a predetermined limit and higher than in the other feeder phases (L1, L2 or L3).

21. A system according to claim 15 or 16, **characterized in that** on identifying the feeder (F2) on which the earth contact occurs the system is arranged to:
monitor, feeder (F1 and F2) specifically, the magnitudes of the pulses caused by the earth contact of the phase (L1, L2 and L3) currents or of variables which are in a known relation to said currents,
compare, feeder (F1 and F2) specifically, the magnitudes and polarities of the pulses caused by the earth contact of the phase (L1, L2 and L3) currents or of variables which are in a known relation to said currents with each other, and
identify the feeder (F1 or F2) as faulty if the current pulse in a feeder phase (L1, L2 or L3) is higher than a predetermined limit, higher than in the other feeder phases (L1, L2 or L3) and has a polarity opposite to the polarities of the current pulses in the other feeder phases.

22. A system according to claim 15 or 16, **characterized in that** on identifying the feeder (F2) on which the earth contact occurs the system is arranged to:
monitor, feeder (F1 and F2) specifically, the magnitudes of the pulses caused by the earth contact of the phase (L1, L2 and L3) currents or of variables which are in a known relation to said currents,
compare, feeder (F1 and F2) specifically, the magnitudes of the pulses caused by the earth contact of the phase (L1, L2 and L3) currents or of variables which are in a known relation to said currents with each other, and the magnitudes of the phase voltages or the magnitudes of variables which are in a known relation to said voltages with each other, and
identify the feeder (F1 or F2) as faulty if the current pulse in a feeder phase (L1, I2 or L3) is higher than a predetermined limit, higher than in the other feeder phases and if the voltage of said phase is also smaller than the voltage in the other phases.

23. A system according to claim 15 or 16, **characterized in that** on identifying the feeder (F2) on which the earth contact occurs the system is arranged to:
compare the polarities of the pulses caused by the earth contact of the sum currents of the feeder (F1 and F2) phases (L1, L2 and L3) or of variables which are in a known phase shift with said sum currents with each other, and
identify the feeder (F1 or F2) as faulty if the polarity of the sum current on the feeder is opposite to the polarities of the sum currents on the other feeders.

24. A system according to claim 15 or 16, **characterized in that** on identifying the feeder (F2) on which the earth contact occurs the system is arranged to:
compare the magnitudes of the pulses caused by the earth contact of the sum currents of the feeder (F1 and F2) phases (L1, L2 and L3) or of variables which are in a known relation to said sum currents with each other, and
identify the feeder (F1 or F2) as faulty if the sum current pulse on the feeder is higher than on the other feeders.

25. A system according to any one of claims 15 to 24, **characterized in that** if the electricity network comprises a back-up earth-fault protection, such as a zero voltage relay or a zero current relay, the system is arranged to prevent operation of the back-up earth-fault protection if at least a predetermined number of earth contacts is detected in the electricity network within a predetermined period.

26. A system according to any one of claims 15 to 24, **characterized in that** if the electricity network comprises a back-up earth-fault protection, such as a zero voltage relay or a zero current relay, the system is arranged to prevent operation of the back-up earth-fault protection if the amplitude of the zero voltage in the electricity network or that of the zero current at the supply point (S) decreases substantially exponentially.

27. A system according to any one of claims 15 to 24, **characterized in that** if the electricity network comprises a back-up earth-fault protection, such as a zero voltage relay or a zero current relay, the system is arranged to prevent operation of the back-up earth-fault protection if the frequency of the zero voltage in the electricity network or that of the zero current at the supply point (S) differs substantially from the nominal frequency of the electricity network.

28. A system according to any one of claims 15 to 27, **characterized in that** the system is arranged to allow reclosings to eliminate a certain earth fault only if it identifies that the earth fault is a restriking earth fault.

29. A detecting apparatus for indicating the direction of the location of a restriking earth fault in an electricity network which comprises a star point one or more feeders (F1 and F2) going out from a supply point (S) and is preferably a three-phase (L1, L2 and L3) network, the detection apparatus being located at some point of the electricity network and arranged to:
detect an earth contact related to an earth fault in the electricity network,
identify, by means of current pulses or current pulses and voltage values related to the earth contact, whether the earth contact occurs in the direction of the supply point (S) of the electricity network, i.e. in the upstream direction, with respect to the apparatus or in the other direction, i.e. in the downstream direction, a current value being interpreted as a current pulse at the moment the instantaneous value of the current divided by the effective value of the current exceeds a predetermined limit, **characterized in that** the apparatus is also arranged to
calculate the number of detected earth contacts per both said directions, and
indicate that there is a restriking earth fault in a certain direction if the number of the detected earth contacts per said direction exceeds a predetermined number within a predetermined period, or if the number of the detected earth faults per said direction exceeds a predetermined number while the voltage between the star point of the electricity network and the earth, i.e. the zero voltage, remains above a predetermined limit, wherein said predetermined number is greater than one.

30. An apparatus according to claim 29, **characterized in that** the apparatus is arranged to subtract one from the number of the earth contacts detected in a certain direction if the number is greater than zero and if an earth contact is detected in the other direction.

31. An apparatus according to claim 29 or 30,
**characterized in that** on identifying the direction in which the earth contact occurs the apparatus is arranged to:
identify the faulty phase (L3),
compare the polarity of the pulse caused by the earth contact of the current in the faulty phase (L3), of the sum current of the phases (L1, L2 and L3) or of a variable which is in a known phase shift with said currents with the polarity of the instantaneous value of the voltage in the faulty phase (L3) or with the polarity of a variable which is in a known phase shift with said voltage at the moment of the earth fault, and
identify that the fault is in the downstream direction from the apparatus if the polarity of the current in the faulty phase (L3) or that of the sum current of the phases is the same as the polarity of the instantaneous value of the voltage in the faulty phase, and that otherwise the fault is in the upstream direction from the apparatus.

32. An apparatus according to claim 29 or 30, **characterized**
**in that** on identifying the direction in which the earth contact occurs the apparatus is arranged to:
identify the faulty phase (L3),
compare the polarity of the pulse caused by the earth contact of the current in the faulty phase (L3) or of a variable which is in a known phase shift with said current with the polarity of the momentary change in the zero voltage of the network or in a variable which is in a known phase shift with said zero voltage at the moment of the earth fault, and
identify that the fault is in the downstream direction from the apparatus if the polarity of the current in the faulty phase (L3) is opposite to the polarity of the momentary change in the zero voltage of the network, and that otherwise the fault is in the upstream direction from the apparatus.

33. An apparatus according to claim 29 or 30,
**characterized in that** on identifying the direction in which the earth contact occurs the apparatus is arranged to:
compare the polarity of the pulse caused by the earth contact of the sum current of the phases (L1, L2 and L3) or of a variable which is in a known phase shift with said sum current with the polarity of the momentary change in the zero voltage of the network or in a variable which is in a known phase shift with said zero voltage at the moment of the earth fault, and
identify that the fault is in the downstream direction from the apparatus if the polarity of the sum current of the phases (L1, L2 and L3) is opposite to the polarity of the momentary change in the zero voltage of the network, and that otherwise the fault is in the upstream direction from the apparatus.

34. An apparatus according to claim 29 or 30,
**characterized in that** on identifying the direction in which the earth contact occurs the apparatus is arranged to:
monitor the magnitudes of the pulses caused by the earth contact of the phase (L1, L2 and L3) currents or of variables which are in a known relation to said currents, and
compare the magnitudes of the pulses caused by the earth contact of the phase (L1, L2 and L3) currents or of variables which are in a known relation to said currents with each other, and
identify that the fault is in the downstream direction from the apparatus if the current pulse in a phase (L1, L2 or L3) is higher than a predetermined limit and higher than in the other phases, and that otherwise the fault is in the upstream direction from the apparatus.

35. An apparatus according to claim 29 or 30, **characterized**
**in that** on identifying the direction in which the earth contact occurs the apparatus is arranged to:
monitor the magnitudes of the pulses caused by earth contact of the phase (L1, L2 and L3) currents or of variables which are in a known relation to said currents,
compare the magnitudes and polarities of the pulses caused by the earth contact of the phase (L1, L2 and L3) currents or of variables which are in a known relation to said currents with each other, and
identify that the fault is in the downstream direction from the apparatus if the current pulse in a phase (L1, L2 or L3) is higher than a predetermined limit, higher than in the other phases and has a polarity opposite to the polarities of the current pulses in the other phases, and that otherwise the fault is in the upstream direction from the apparatus.

36. An apparatus according to claim 29 or 30,
**characterized in that** on identifying the direction in which the earth contact occurs the apparatus is arranged to:
monitor the magnitudes of the pulses caused by the earth contact of the phase (L1, L2 and L3) currents or of variables which are in a known relation to said currents,
compare the magnitudes of the pulses caused by the earth contact of the phase (L1, L2 and L3) currents or of variables which are in a known relation to said currents with each other, and the magnitudes of the phase voltages or the magnitudes of variables which are in a known relation to said voltages with each other, and
identify that the fault is in the downstream direction from the apparatus if the current pulse in a phase (L1, L2 or L3) is higher than a predetermined limit, higher than in the other phases and if the voltage of said phase is also smaller than the voltage in the other phases, and that otherwise the fault is in the upstream direction from the apparatus.

## Patentansprüche

1. Verfahren zum Schutz eines Stromnetzes vor intermittierenden Erdschlussfehlern, wobei das Stromnetz einen Sternpunkt aufweist, bei dem eine oder mehrere Zuleitungen von einem Einspeisepunkt ausgehen und das Netz vorzugsweise ein dreiphasiges Netz ist, wobei das Verfahren die folgenden Schritte aufweist:
Erkennen eines Erdkontakts, der mit einem Erdschlussfehler in dem Stromnetz in Zusammenhang steht,
Identifizieren der Zuleitung, in welcher der Erdkontakt auftritt, mittels Stromimpulsen oder Stromimpulsen und Spannungswerten, die in Zusammenhang mit dem Erdkontakt stehen, wobei ein Stromwert interpretiert wird als ein Stromimpuls zu dem Zeitpunkt, zu welchem der momentane Wert des Stroms geteilt durch den effektiven Wert des Stroms eine vorbestimmte Grenze überschreitet, **gekennzeichnet durch**
das Berechnen der Anzahl erkannter Erdkontakte für jede Zuleitung, und
das Erkennen des Vorliegens eines Erdschlusses in der Zuleitung, wenn die Anzahl der erkannten Erdkontakte für diese Zuleitung während eines vorbestimmten Zeitraums eine vorbestimmte Anzahl übersteigt, oder wenn die Anzahl der erkannten Erdkontakte für die Zuleitung eine vorbestimmte Anzahl übersteigt, während die Spannung zwischen dem Sternpunkt des Stromnetzes und Masse, d.h. die Null-Spannung, über einer vorbestimmten Grenze bleibt, wobei die vorbestimmte Anzahl größer als eins ist.

2. Verfahren nach Anspruch 1, **dadurch gekennzeichnet, dass** von der Anzahl der erkannten Erdkontakte in einer Zuleitung eins subtrahiert wird, wenn die Anzahl größer als null ist und wenn ein Erdkontakt in einer anderen Zuleitung erkannt wird.

3. Verfahren nach Anspruch 1 oder 2, **dadurch gekennzeichnet, dass** der Schritt des Identifizierens der Zuleitung, in welcher der Erdkontakt auftritt, die folgenden Schritte aufweist:
Identifizieren der fehlerhaften Phase,
zuleitungsspezifisches Vergleichen der Polarität des durch den Erdkontakt verursachten Impulses des Stroms in der fehlerhaften Phase, des Summenstroms der Phasen oder einer Variablen, die eine bekannte Phasenverschiebung in Bezug auf die Ströme aufweist, mit der Polarität des momentanen Werts der Spannung in der fehlerhaften Phase oder mit der Polarität einer Variablen, die eine bekannte Phasenverschiebung in Bezug auf die Spannung zum Zeitpunkt des Erdschlusses aufweist, und
Identifizieren der Zuleitung als fehlerhaft, wenn die Polarität in der fehlerhaften Phase oder diejenige des Summenstroms der Phasen gleich der Polarität des momentanen Werts der Spannung in der fehlerhaften Phase ist.

4. Verfahren nach Anspruch 1 oder 2, **dadurch gekennzeichnet, dass** der Schritt des Identifizierens der Zuleitung, in welcher der Erdkontakt auftritt, die folgenden Schritte aufweist:
Identifizieren der fehlerhaften Phase,
zuleitungsspezifisches Vergleichen der Polarität des durch den Erdkontakt verursachten Impulses des Stroms in der fehlerhaften Phase oder einer Variablen, die eine bekannte Phasenverschiebung in Bezug auf den Strom aufweist, mit der Polarität der momentanen Veränderung der Null-Spannung in dem Netz oder in einer Variablen, die eine bekannte Phasenverschiebung in Bezug auf die Null-Spannung zum Zeitpunkt des Erdschlusses aufweist, und
Identifizieren der Zuleitung als fehlerhaft, wenn die Polarität des Stroms in der fehlerhaften Phase zu der Polarität der momentanen Veränderung der Null-Spannung des Netzes entgegengesetzt ist.

5. Verfahren nach Anspruch 1 oder 2, **dadurch gekennzeichnet, dass** der Schritt des Identifizierens der Zuleitung, in welcher der Erdkontakt auftritt, die folgenden Schritte aufweist:
zuleitungsspezifisches Vergleichen der Polarität des durch den Erdkontakt verursachten Impulses des Summenstroms der Phasen oder einer Variablen, die eine bekannte Phasenverschiebung in Bezug auf den Summenstrom aufweist, mit der Polarität der momentanen Veränderung der Null-Spannung in dem Netz oder in einer Variablen, die eine bekannte Phasenverschiebung in Bezug auf die Null-Spannung zum Zeitpunkt des Erdschlusses aufweist, und
Identifizieren der Zuleitung als fehlerhaft, wenn die Polarität des Summenstroms der Phasen zu der Polarität der momentanen Veränderung der Null-Spannung des Netzes entgegengesetzt ist.

6. Verfahren nach Anspruch 1 oder 2, **dadurch gekennzeichnet, dass** der Schritt des Identifizierens der Zuleitung, in welcher der Erdkontakt auftritt, die folgenden Schritte aufweist:
zuleitungsspezifisches Überwachen der Stärken der durch den Erdkontakt verursachen Impulse der Phasenströme oder von Variablen, die in einer bekannten Beziehung zu den Strömen stehen, und
zuleitungsspezifisches Vergleichen der Stärken der durch den Erdkontakt verursachten Impulse der Phasenströme oder von Variablen, die in einer bekannten Beziehung zu den Strömen stehen, miteinander, und
Identifizieren der Zuleitung als fehlerhaft, wenn der Stromimpuls einer Zuleitungsphase höher als eine vorbestimmte Grenze und höher als in den anderen Zuleitungsphasen ist.

7. Verfahren nach Anspruch 1 oder 2, **dadurch gekennzeichnet, dass** der Schritt des Identifizierens der Zuleitung, in welcher der Erdkontakt auftritt, die folgenden Schritte aufweist:
zuleitungsspezifisches Überwachen der Stärken der durch den Erdkontakt verursachen Impulse der Phasenströme oder von Variablen, die in einer bekannten Beziehung zu den Strömen stehen, und
zuleitungsspezifisches Vergleichen der Stärken und Polaritäten der durch den Erdkontakt verursachten Impulse der Phasenströme oder von Variablen, die in einer bekannten Beziehung zu den Strömen stehen, miteinander, und
Identifizieren der Zuleitung als fehlerhaft, wenn der Stromimpuls einer Zuleitungsphase höher als eine vorbestimmte Grenze ist, höher als in den anderen Zuleitungsphasen ist und eine zu den Polaritäten der Stromimpulse in den anderen Zuleitungsphasen entgegengesetzte Polarität hat.

8. Verfahren nach Anspruch 1 oder 2, **dadurch gekennzeichnet, dass** der Schritt des Identifizierens der Zuleitung, in welcher der Erdkontakt auftritt, die folgenden Schritte aufweist:
zuleitungsspezifisches Überwachen der Stärken der durch den Erdkontakt verursachen Impulse der Phasenströme oder von Variablen, die in einer bekannten Beziehung zu den Strömen stehen, und
zuleitungsspezifisches Vergleichen der Stärken der durch den Erdkontakt verursachten Impulse der Phasenströme oder von Variablen, die in einer bekannten Beziehung zu den Strömen stehen, miteinander, und der Stärken der Phasenspannungen oder der Stärken von Variablen, die in einer bekannten Beziehung zu den Spannungen stehen, miteinander, und
Identifizieren der Zuleitung als fehlerhaft, wenn der Stromimpuls einer Zuleitungsphase höher als eine vorbestimmte Grenze ist, höher als in den anderen Zuleitungsphasen ist und die Spannung der Phase auch niedriger ist als die Spannung der anderen Phasen.

9. Verfahren nach Anspruch 1 oder 2, **dadurch gekennzeichnet, dass** der Schritt des Identifizierens der Zuleitung, in welcher der Erdkontakt auftritt, die folgenden Schritte aufweist:
Vergleichen der Polaritäten der durch den Erdkontakt verursachten Impulse der Summenströme der Zuleitungsphasen oder von Variablen, die eine bekannte Phasenverschiebung in Bezug auf die Summenströme aufweisen, miteinander, und
Identifizieren der Zuleitung als fehlerhaft, wenn die Polarität des Summenstroms in der Zuleitung zu den Polaritäten der Summenströme in den anderen Zuleitungen entgegengesetzt ist.

10. Verfahren nach Anspruch 1 oder 2, **dadurch gekennzeichnet, dass** der Schritt des Identifizierens der Zuleitung, in welcher der Erdkontakt auftritt, die folgenden Schritte aufweist:
Vergleichen der Stärken der durch den Erdkontakt verursachten Impulse der Summenströme der Zuleitungsphasen oder von Variablen, die in einer bekannten Beziehung zu den Summenströmen stehen, miteinander, und
Identifizieren der Zuleitung als fehlerhaft, wenn der Summenstromimpuls auf der Zuleitung höher als auf den anderen Zuleitungen ist.

11. Verfahren nach einem der Ansprüche 1 bis 10, **dadurch gekennzeichnet, dass** bei der Verwendung einer Sicherheits-Erdschlussschutzvorrichtung, beispielsweise eines Null-Spannungsrelais oder eines Null-Stromrelais, in dem Stromnetz, der Betrieb der Sicherheits-Erdschlussschutzvorrichtung unterbunden wird, wenn eine vorbestimmte Anzahl von Erdkontakten in dem Stromnetz innerhalb eines vorbestimmten Zeitraums erkannt wird.

12. Verfahren nach einem der Ansprüche 1 bis 10, **dadurch gekennzeichnet, dass** bei der Verwendung einer Sicherheits-Erdschlussschutzvorrichtung, beispielsweise eines Null-Spannungsrelais oder eines Null-Stromrelais, in dem Stromnetz, der Betrieb der Sicherheits-Erdschlussschutzvorrichtung unterbunden wird, wenn die Amplitude der Null-Spannung in dem Stromnetz oder diejenige des Null-Stroms am Einspeisepunkt im Wesentlichen exponentiell ansteigt.

13. Verfahren nach einem der Ansprüche 1 bis 10, **dadurch gekennzeichnet, dass** bei der Verwendung einer Sicherheits-Erdschlussschutzvorrichtung, beispielsweise eines Null-Spannungsrelais oder eines Null-Stromrelais, in dem Stromnetz, der Betrieb der Sicherheits-Erdschlussschutzvorrichtung unterbunden wird, wenn die Frequenz der Null-Spannung im Stromnetz oder diejenige des Null-Stroms am Einspeisepunkt sich erheblich von der Nennfrequenz des Stromnetzes unterscheidet.

14. Verfahren nach einem der Ansprüche 1 bis 13, **dadurch gekennzeichnet, dass** Wiedereinschaltungen zum Eliminieren eines bestimmten Erdschlussfehlers nur durchgeführt werden können, wenn der Erdschlussfehler als ein intermittierender Erdschlussfehler erkannt wurde.

15. System zum Schutz eines Stromnetzes vor intermittierenden Erdschlussfehlern, wobei das Stromnetz einen Sternpunkt aufweist, bei dem eine oder mehrere Zuleitungen (F1 und F2) von einem Einspeisepunkt (S) ausgehen und das Netz vorzugsweise ein dreiphasiges (L1, L2 und L3) Netz ist, wobei das System ausgebildet ist, um:
einen Erdkontakt, der mit einem Erdschlussfehler in dem Stromnetz in Zusammenhang steht, zu erkennen,
der Zuleitung (F2), in welcher der Erdkontakt auftritt, mittels Stromimpulsen oder Stromimpulsen und Spannungswerten, die in Zusammenhang mit dem Erdkontakt stehen, zu identifizieren, wobei ein Stromwert interpretiert wird als ein Stromimpuls zu dem Zeitpunkt, zu welchem der momentane Wert des Stroms geteilt durch den effektiven Wert des Stroms eine vorbestimmte Grenze überschreitet, **dadurch gekennzeichnet, dass** das System ferner ausgebildet ist, um:
die Anzahl erkannter Erdkontakte für jede Zuleitung (F1 und F2) zu berechnen, und
das Vorliegen eines Erdschlusses in der Zuleitung (F1 oder F2) zu identifizieren, wenn die Anzahl der erkannten Erdkontakte für diese Zuleitung (F1 oder F2) während eines vorbestimmten Zeitraums eine vorbestimmte Anzahl übersteigt, oder wenn die Anzahl der erkannten Erdkontakte für die Zuleitung (F1 oder F2) eine vorbestimmte Anzahl übersteigt, während die Spannung zwischen dem Sternpunkt des Stromnetzes und Masse, d.h. die Null-Spannung, über einer vorbestimmten Grenze bleibt, wobei die vorbestimmte Anzahl größer als eins ist.

16. System nach Anspruch 15, **dadurch gekennzeichnet, dass** das System derart ausgebildet ist, dass es von der Anzahl der erkannten Erdkontakte in einer Zuleitung (F1 oder F2) eins subtrahiert, wenn die Anzahl größer als null ist und wenn ein Erdkontakt in einer anderen Zuleitung (F1 oder F2) erkannt wird.

17. System nach Anspruch 15 oder 16, **dadurch gekennzeichnet, dass** beim Identifizieren der Zuleitung (F2), in welcher der Erdkontakt auftritt, das System ausgebildet ist, um:
die fehlerhafte Phase (L3) zu identifizieren,
zuleitungsspezifisch (F1 und F2) die Polarität des durch den Erdkontakt verursachten Impulses des Stroms in der fehlerhaften Phase (L3), des Summenstroms der Phasen (L1, L2 und L3) oder einer Variablen, die eine bekannte Phasenverschiebung in Bezug auf die Ströme aufweist, mit der Polarität des momentanen Werts der Spannung in der fehlerhaften Phase (L3) oder mit der Polarität einer Variablen, die eine bekannte Phasenverschiebung in Bezug auf die Spannung zum Zeitpunkt des Erdschlusses aufweist, zu vergleichen und
die Zuleitung (F1 oder F2) als fehlerhaft zu identifizieren, wenn die Polarität in der fehlerhaften Phase (L3) oder diejenige des Summenstroms der Phasen (L1, L2 und L3) gleich der Polarität des momentanen Werts der Spannung in der fehlerhaften Phase ist.

18. System nach Anspruch 15 oder 16, **dadurch gekennzeichnet, dass** beim Identifizieren der Zuleitung (F2), in welcher der Erdkontakt auftritt, das System ausgebildet ist, um:
die fehlerhafte Phase (L3) zu identifizieren,
zuleitungsspezifisch (F1 und F2) die Polarität des durch den Erdkontakt verursachten Impulses des Stroms in der fehlerhaften Phase (L3) oder einer Variablen, die eine bekannte Phasenverschiebung in Bezug auf den Strom aufweist, mit der Polarität der momentanen Veränderung der Null-Spannung in dem Netz oder in einer Variablen, die eine bekannte Phasenverschiebung in Bezug auf die Null-Spannung zum Zeitpunkt des Erdschlusses aufweist, zu vergleichen und
die Zuleitung (F1 oder F2) als fehlerhaft zu identifizieren, wenn die Polarität des Stroms in der fehlerhaften Phase (L3) zu der Polarität der momentanen Veränderung der Null-Spannung des Netzes entgegengesetzt ist.

19. System nach Anspruch 15 oder 16, **dadurch gekennzeichnet, dass** beim Identifizieren der Zuleitung (F2), in welcher der Erdkontakt auftritt, das System ausgebildet ist, um:
zuleitungsspezifisch (F1 und F2) die Polarität des durch den Erdkontakt verursachten Impulses des Summenstroms der Phasen (L1, L2 und L3) oder einer Variablen, die eine bekannte Phasenverschiebung in Bezug auf den Summenstrom aufweist, mit der Polarität der momentanen Veränderung der Null-Spannung in dem Netz oder in einer Variablen, die eine bekannte Phasenverschiebung in Bezug auf die Null-Spannung zum Zeitpunkt des Erdschlusses aufweist, zu vergleichen, und
die Zuleitung (F1 oder F2) als fehlerhaft zu identifizieren, wenn die Polarität des Summenstroms der Phasen (L1, L2 und L3) zu der Polarität der momentanen Veränderung der Null-Spannung des Netzes entgegengesetzt ist.

20. System nach Anspruch 15 oder 16, **dadurch gekennzeichnet, dass** beim Identifizieren der Zuleitung (F2), in welcher der Erdkontakt auftritt, das System ausgebildet ist, um:
zuleitungsspezifisch (F1 und F2) die Stärken der durch den Erdkontakt verursachen Impulse der Ströme der Phasen (L1, L2 und L3) oder von Variablen, die in einer bekannten Beziehung zu den Strömen stehen, zu überwachen und
zuleitungsspezifisch (F1 und F2) die Stärken der durch den Erdkontakt verursachten Impulse der Ströme der Phasen (L1, L2 und L3) oder von Variablen, die in einer bekannten Beziehung zu den Strömen stehen, miteinander zu vergleichen, und
die Zuleitung (F1 oder F2) als fehlerhaft zu identifizieren, wenn der Stromimpuls einer Zuleitungsphase (L1, L2 oder L3) höher als eine vorbestimmte Grenze und höher als in den anderen Zuleitungsphasen (L1, L2 oder L3) ist.

21. System nach Anspruch 15 oder 16, **dadurch gekennzeichnet, dass** beim Identifizieren der Zuleitung (F2), in welcher der Erdkontakt auftritt, das System ausgebildet ist, um:
zuleitungsspezifisch (F1 und F2) die Stärken der durch den Erdkontakt verursachen Impulse der Ströme der Phasen (L1, L2 und L3) oder von Variablen, die in einer bekannten Beziehung zu den Strömen stehen, zu überwachen und
zuleitungsspezifisch (F1 und F2) die Stärken und Polaritäten der durch den Erdkontakt verursachten Impulse der Ströme der Phasen (L1, L2 und L3) oder von Variablen, die in einer bekannten Beziehung zu den Strömen stehen, miteinander zu vergleichen, und
die Zuleitung (F1 oder F2) als fehlerhaft zu identifizieren, wenn der Stromimpuls einer Zuleitungsphase (L1, L2 oder L3) höher als eine vorbestimmte Grenze ist, höher als in den anderen Zuleitungsphasen (L1, L2 oder L3) ist und eine zu den Polaritäten der Stromimpulse in den anderen Zuleitungsphasen entgegengesetzte Polarität hat.

22. System nach Anspruch 15 oder 16, **dadurch gekennzeichnet, dass** beim Identifizieren der Zuleitung (F2), in welcher der Erdkontakt auftritt, das System ausgebildet ist, um:
zuleitungsspezifisch (F1 und F2) die Stärken der durch den Erdkontakt verursachen Impulse der Ströme der Phasen (L1, L2 und L3) oder von Variablen, die in einer bekannten Beziehung zu den Strömen stehen zu überwachen, und
zuleitungsspezifisch (F1 und F2) die Stärken der durch den Erdkontakt verursachten Impulse der Ströme der Phasen (L1, L2 und L3) oder von Variablen, die in einer bekannten Beziehung zu den Strömen stehen, miteinander, und der Stärken der Phasenspannungen oder der Stärken von Variablen, die in einer bekannten Beziehung zu den Spannungen stehen, miteinander zu vergleichen, und
die Zuleitung (F1 oder F2) als fehlerhaft zu identifizieren, wenn der Stromimpuls einer Zuleitungsphase (L1, L2 oder L3) höher als eine vorbestimmte Grenze ist, höher als in den anderen Zuleitungsphasen ist und die Spannung der Phase auch niedriger ist als die Spannung der anderen Phasen.

23. System nach Anspruch 15 oder 16, **dadurch gekennzeichnet, dass** beim Identifizieren der Zuleitung (F2), in welcher der Erdkontakt auftritt, das System ausgebildet ist, um:
die Polaritäten der durch den Erdkontakt verursachten Impulse der Summenströme der Phasen (L1, L2 und L3) der Phasen (F1 und F2) oder von Variablen, die eine bekannte Phasenverschiebung in Bezug auf die Summenströme aufweisen, miteinander zu vergleichen, und
die Zuleitung (F1 oder F2) als fehlerhaft zu identifizieren, wenn die Polarität des Summenstroms in der Zuleitung zu den Polaritäten der Summenströme in den anderen Zuleitungen entgegengesetzt ist.

24. System nach Anspruch 15 oder 16, **dadurch gekennzeichnet, dass** beim Identifizieren der Zuleitung (F2), in welcher der Erdkontakt auftritt, das System ausgebildet ist, um:
die Stärken der durch den Erdkontakt verursachten Impulse der Summenströme der Phasen (L1, L2 und L3) der Zuleitungen (F1 und F2) oder von Variablen, die in einer bekannten Beziehung zu den Summenströmen stehen, miteinander zu vergleichen, und
die Zuleitung (F1 oder F2) als fehlerhaft zu identifizieren, wenn der Summenstromimpuls auf der Zuleitung höher als auf den anderen Zuleitungen ist.

25. System nach einem der Ansprüche 15 bis 24, **dadurch gekennzeichnet, dass** bei der Verwendung einer Sicherheits-Erdschlussschutzvorrichtung, beispielsweise eines Null-Spannungsrelais oder eines Null-Stromrelais, in dem Stromnetz, das System so ausgebildet ist, dass es den Betrieb der Sicherheits-Erdschlussschutzvorrichtung unterbindet, wenn mindestens eine vorbestimmte Anzahl von Erdkontakten in dem Stromnetz innerhalb eines vorbestimmten Zeitraums erkannt wird.

26. System nach einem der Ansprüche 15 bis 24" **dadurch gekennzeichnet, dass** bei der Verwendung einer Sicherheits-Erdschlussschutzvorrichtung, beispielsweise eines Null-Spannungsrelais oder eines Null-Stromrelais, in dem Stromnetz, das System so ausgebildet ist, dass es den Betrieb der Sicherheits-Erdschlussschutzvorrichtung unterbindet, wenn die Amplitude der Null-Spannung in dem Stromnetz oder diejenige des Null-Stroms am Einspeisepunkt (S) im Wesentlichen exponentiell ansteigt.

27. System nach einem der Ansprüche 15 bis 24, **dadurch gekennzeichnet, dass** bei der Verwendung einer Sicherheits-Erdschlussschutzvorrichtung, beispielsweise eines Null-Spannungsrelais oder eines Null-Stromrelais, in dem Stromnetz, das System so ausgebildet ist, dass es den Betrieb der Sicherheits-Erdschlussschutzvorrichtung unterbindet, wenn die Frequenz der Null-Spannung im Stromnetz oder diejenige des Null-Stroms am Einspeisepunkt (S) sich erheblich von der Nennfrequenz des Stromnetzes unterscheidet.

28. System nach einem der Ansprüche 15 bis 24, **dadurch gekennzeichnet, dass** das das System so ausgebildet ist, dass Wiedereinschaltungen zum Eliminieren eines bestimmten Erdschlussfehlers nur durchgeführt werden können, wenn es den Erdschlussfehler als einen intermittierenden Erdschlussfehler erkennt.

29. Erkennungsvorrichtung zum Anzeigen der Richtung der Position eines intermittierenden Erdschlussfehlers in einem Stromnetz, wobei das Stromnetz einen Sternpunkt aufweist, bei dem eine oder mehrere Zuleitungen (F1 und F2) von einem Einspeisepunkt (S) ausgehen und das Netz vorzugsweise ein dreiphasiges (L1, L2 und L3) Netz ist, wobei die Erkennungsvorrichtung an einer beliebigen Stelle des Stromnetzes angeordnet und ausgebildet ist, um:
einen Erdkontakt, der mit einem Erdschlussfehler in dem Stromnetz in Zusammenhang steht, zu erkennen,
mittels Stromimpulsen oder Stromimpulsen und Spannungswerten, welche in Zusammenhang mit dem Erdkontakt stehen, zu identifizieren, ob der Erdkontakt in Richtung des Einspeisepunkts (S) des Netzes, d.h. stromaufwärts der Vorrichtung, oder in der anderen Richtung, d.h. stromabwärts der Vorrichtung auftritt, wobei ein Stromwert interpretiert wird als ein Stromimpuls zu dem Zeitpunkt, zu welchem der momentane Wert des Stroms geteilt durch den effektiven Wert des Stroms eine vorbestimmte Grenze überschreitet, **dadurch gekennzeichnet, dass** die Vorrichtung ferner ausgebildet ist, um:
die Anzahl der erkannten Erdkontakte für jede der beiden Richtungen zu berechnen,
das Vorhandensein eines intermittierenden Erdschlussfehlers in einer bestimmten Richtung anzuzeigen, wenn die Anzahl der erkannten Erdkontakte für diese Richtung eine vorbestimmte Anzahl in einem vorbestimmten Zeitraum übersteigt, oder wenn die Anzahl der erkannten Erdkontakte für diese Richtung eine vorbestimmte Anzahl übersteigt, während die Spannung zwischen dem Sternpunkt des Stromnetzes und Masse, d.h. die Null-Spannung, über einer vorbestimmten Grenze bleibt, wobei die vorbestimmte Anzahl größer als eins ist.

30. Vorrichtung nach Anspruch 29, **dadurch gekennzeichnet, dass** die Vorrichtung derart ausgebildet ist, dass sie von der Anzahl der in einer Richtung erkannten Erdkontakte eins subtrahiert, wenn die Anzahl größer als null ist und wenn ein Erdkontakt in einer anderen Richtung erkannt wird.

31. Vorrichtung nach Anspruch 29 oder 30, **dadurch gekennzeichnet, dass** beim Identifizieren der Richtung, in welcher der Erdkontakt auftritt, die Vorrichtung ausgebildet ist, um:
die fehlerhafte Phase (L3) zu identifizieren,
die Polarität des durch den Erdkontakt verursachten Impulses des Stroms in der fehlerhaften Phase (L3), des Summenstroms der Phasen (L1, L2 und L3) oder einer Variablen, die eine bekannte Phasenverschiebung in Bezug auf die Ströme aufweist, mit der Polarität des momentanen Werts der Spannung in der fehlerhaften Phase (L3) oder mit der Polarität einer Variablen, die eine bekannte Phasenverschiebung in Bezug auf die Spannung zum Zeitpunkt des Erdschlusses aufweist, zu vergleichen und
zu identifizieren, dass der Fehler stromabwärts der Vorrichtung liegt, wenn die Polarität in der fehlerhaften Phase (L3) oder diejenige des Summenstroms der Phasen gleich der Polarität des momentanen Werts der Spannung in der fehlerhaften Phase ist, und dass der Fehler ansonsten stromaufwärts der Vorrichtung liegt.

32. Vorrichtung nach Anspruch 29 oder 30, **dadurch gekennzeichnet, dass** beim Identifizieren der Richtung, in welcher der Erdkontakt auftritt, das System ausgebildet ist, um:
die fehlerhafte Phase (L3) zu identifizieren,
die Polarität des durch den Erdkontakt verursachten Impulses des Stroms in der fehlerhaften Phase (L3) oder einer Variablen, die eine bekannte Phasenverschiebung in Bezug auf den Strom aufweist, mit der Polarität der momentanen Veränderung der Null-Spannung in dem Netz oder in einer Variablen, die eine bekannte Phasenverschiebung in Bezug auf die Null-Spannung zum Zeitpunkt des Erdschlusses aufweist, zu vergleichen und
zu identifizieren, dass der Fehler stromabwärts der Vorrichtung liegt, wenn die Polarität des Stroms in der fehlerhaften Phase (L3) zu der Polarität der momentanen Veränderung der Null-Spannung des Netzes entgegengesetzt ist, und dass ansonsten der Fehler stromaufwärts der Vorrichtung liegt..

33. Vorrichtung nach Anspruch 29 oder 30, **dadurch gekennzeichnet, dass** beim Identifizieren der Richtung, in welcher der Erdkontakt auftritt, das System ausgebildet ist, um:
die Polarität des durch den Erdkontakt verursachten Impulses des Summenstroms der Phasen (L1, L2 und L3) oder einer Variablen, die eine bekannte Phasenverschiebung in Bezug auf den Summenstrom aufweist, mit der Polarität der momentanen Veränderung der Null-Spannung in dem Netz oder in einer Variablen, die eine bekannte Phasenverschiebung in Bezug auf die Null-Spannung zum Zeitpunkt des Erdschlusses aufweist, zu vergleichen, und
zu identifizieren, dass der Fehler stromabwärts der Vorrichtung liegt, wenn die Polarität des Summenstroms der Phasen (L1, L2 und L3) zu der Polarität der momentanen Veränderung der Null-Spannung des Netzes entgegengesetzt ist, und dass der Fehlers ansonsten stromaufwärts der Vorrichtung liegt.

34. Vorrichtung nach Anspruch 29 oder 30, **dadurch gekennzeichnet, dass** beim Identifizieren der Richtung, in welcher der Erdkontakt auftritt, das System ausgebildet ist, um:
die Stärken der durch den Erdkontakt verursachen Impulse der Ströme der Phasen (L1, L2 und L3) oder von Variablen, die in einer bekannten Beziehung zu den Strömen stehen, zu überwachen und
die Stärken der durch den Erdkontakt verursachten Impulse der Ströme der Phasen (L1, L2 und L3) oder von Variablen, die in einer bekannten Beziehung zu den Strömen stehen, miteinander zu vergleichen, und
zu identifizieren, dass der Fehler stromabwärts der Vorrichtung liegt, wenn der Stromimpuls einer Phase (L1, L2 oder L3) höher als eine vorbestimmte Grenze und höher als in den anderen Phasen ist, und dass der Fehler ansonsten stromaufwärts der Vorrichtung liegt.

35. Vorrichtung nach Anspruch 29 oder 30, **dadurch gekennzeichnet, dass** beim Identifizieren der Richtung, in welcher der Erdkontakt auftritt, das System ausgebildet ist, um:
die Stärken der durch den Erdkontakt verursachen Impulse der Ströme der Phasen (L1, L2 und L3) oder von Variablen, die in einer bekannten Beziehung zu den Strömen stehen, zu überwachen und
die Stärken und Polaritäten der durch den Erdkontakt verursachten Impulse der Ströme der Phasen (L1, L2 und L3) oder von Variablen, die in einer bekannten Beziehung zu den Strömen stehen, miteinander zu vergleichen, und
zu identifizieren, dass der Fehler stromabwärts der Vorrichtung liegt, wenn der Stromimpuls einer Phase (L1, L2 oder L3) höher als eine vorbestimmte Grenze ist, höher als in den anderen Phasen ist und eine zu den Polaritäten der Stromimpulse in den anderen Phasen entgegengesetzte Polarität hat, und dass der Fehler ansonsten stromaufwärts der Vorrichtung liegt.

36. Vorrichtung nach Anspruch 29 oder 30, **dadurch gekennzeichnet, dass** beim Identifizieren der Richtung, in welcher der Erdkontakt auftritt, das System ausgebildet ist, um:
die Stärken der durch den Erdkontakt verursachen Impulse der Ströme der Phasen (L1, L2 und L3) oder von Variablen, die in einer bekannten Beziehung zu den Strömen stehen zu überwachen, und
die Stärken der durch den Erdkontakt verursachten Impulse der Ströme der Phasen (L1, L2 und L3) oder von Variablen, die in einer bekannten Beziehung zu den Strömen stehen, miteinander, und der Stärken der Phasenspannungen oder der Stärken von Variablen, die in einer bekannten Beziehung zu den Spannungen stehen, miteinander zu vergleichen, und
zu identifizieren, dass der Fehler stromabwärts der Vorrichtung liegt, wenn der Stromimpuls einer Phase (L1, L2 oder L3) höher als eine vorbestimmte Grenze ist, höher als in den anderen Phasen ist und die Spannung der Phase auch niedriger ist als die Spannung der anderen Phasen, und dass ansonsten der Fehler stromaufwärts er Vorrichtung liegt.

## Revendications

1. Procédé de protection d'un réseau de distribution électrique contre des courants de défaut à la terre récurrents, lequel réseau de distribution électrique comporte un point neutre, une ou plusieurs lignes d'alimentation électrique sortant d'un point d'alimentation et est de préférence un réseau triphasé, le procédé comportant les étapes ci-après consistant à :
détecter un contact à la terre relatif à un courant de défaut à la terre dans le réseau de distribution électrique,
identifier la ligne d'alimentation électrique sur laquelle le contact à la terre est rencontré au moyen d'impulsions de courant ou de valeurs de tension et impulsions de courant relatifs au contact à la terre, une valeur de courant étant interprétée comme une impulsion de courant au moment où la valeur instantanée du courant divisée par la valeur réelle du courant dépasse une limite prédéterminée, **caractérisé par** les étapes ci-après consistant à
calculer le nombre de contacts à la terre détectés pour chaque ligne d'alimentation électrique, et
identifier qu'il existe un courant de défaut à la terre récurrent sur la ligne d'alimentation électrique lorsque le nombre des contacts à la terre détectés pour ladite ligne d'alimentation électrique dépasse un nombre prédéterminé au cours d'une période prédéterminée, ou lorsque le nombre des contacts à la terre détectés pour ladite ligne d'alimentation électrique dépasse un nombre prédéterminé alors que la tension entre le point neutre du réseau de distribution électrique et la terre, c'est-à-dire la tension nulle, demeure supérieure à une limite prédéterminée, dans laquelle ledit nombre prédéterminé est supérieur à un.

2. Procédé selon la revendication 1, **caractérisé en ce que** la valeur 1 est soustraite du nombre de contacts à la terre détectés sur une ligne d'alimentation électrique lorsque le nombre est supérieur à zéro et lorsqu'un contact à la terre est détecté sur une autre ligne d'alimentation électrique.

3. Procédé selon la revendication 1 ou 2, **caractérisé en ce que** l'étape consistant à identifier la ligne d'alimentation électrique sur laquelle le contact à la terre est rencontré, comporte les étapes ci-après consistant à :
identifier la phase défectueuse,
comparer, spécifiquement pour la ligne d'alimentation électrique, la polarité de l'impulsion occasionnée par le contact à la terre du courant dans la phase défectueuse, du courant de somme des phases ou d'une variable qui se trouve dans un déphasage connu avec lesdits courants, à la polarité de la valeur instantanée de la tension dans la phase défectueuse ou à la polarité d'une variable qui se trouve dans un déphasage connu avec ladite tension au moment de l'occurrence du courant de défaut à la terre, et
identifier la ligne d'alimentation électrique comme défectueuse lorsque la polarité du courant dans la phase défectueuse ou celle du courant de somme des phases est identique à la polarité de la valeur instantanée de la tension dans la phase défectueuse.

4. Procédé selon la revendication 1 ou 2, **caractérisé en ce que** l'étape consistant à identifier la ligne d'alimentation électrique sur laquelle le contact à la terre est rencontré, comporte les étapes ci-après consistant à :
identifier la phase défectueuse,
comparer, spécifiquement pour la ligne d'alimentation électrique, la polarité de l'impulsion occasionnée par le contact à la terre du courant dans la phase défectueuse ou d'une variable qui se trouve dans un déphasage connu avec ledit courant, à la polarité de la modification temporaire dans la tension nulle du réseau ou dans une variable qui se trouve dans un déphasage connu avec ladite tension nulle au moment de l'occurrence du courant de défaut à la terre, et
identifier la ligne d'alimentation électrique comme défectueuse lorsque la polarité du courant dans la phase défectueuse est opposée à la polarité de modification temporaire dans la tension nulle du réseau.

5. Procédé selon la revendication 1 ou 2, **caractérisé en ce que** l'étape consistant à identifier la ligne d'alimentation électrique sur laquelle le contact à la terre est rencontré, comporte les étapes ci-après consistant à :
comparer, spécifiquement pour la ligne d'alimentation électrique, la polarité de l'impulsion occasionnée par le contact à la terre du courant de somme des phases ou d'une variable qui se trouve dans un déphasage connu avec ledit courant de somme, à la polarité de la modification temporaire dans la tension nulle du réseau ou dans une variable qui se trouve dans un déphasage connu avec ladite tension nulle au moment de l'occurrence du courant de défaut à la terre, et
identifier la ligne d'alimentation électrique comme défectueuse lorsque la polarité du courant de somme des phases est opposée à la polarité de modification temporaire dans la tension nulle du réseau.

6. Procédé selon la revendication 1 ou 2, **caractérisé en ce que** l'étape consistant à identifier la ligne d'alimentation électrique sur laquelle le contact à la terre est rencontré, comporte les étapes ci-après consistant à :
surveiller, spécifiquement pour la ligne d'alimentation électrique, les amplitudes des impulsions occasionnées par le contact à la terre des courants de phase ou de variables qui se trouvent dans une relation connue avec lesdits courants, et
comparer, spécifiquement pour la ligne d'alimentation électrique, les amplitudes des impulsions occasionnées par le contact à la terre des courants de phase ou de variables qui se trouvent dans une relation connue avec lesdits courants, mutuellement, et
identifier la ligne d'alimentation électrique comme défectueuse lorsque l'impulsion de courant d'une phase de ligne d'alimentation électrique est supérieure à une limite prédéterminée et supérieure relativement aux autres phases de ligne d'alimentation électrique.

7. Procédé selon la revendication 1 ou 2, **caractérisé en ce que** l'étape consistant à identifier la ligne d'alimentation électrique sur laquelle le contact à la terre est rencontré, comporte les étapes ci-après consistant à :
surveiller, spécifiquement pour la ligne d'alimentation électrique, les amplitudes des impulsions occasionnées par le contact à la terre des courants de phase ou de variables qui se trouvent dans une relation connue avec lesdits courants,
comparer, spécifiquement pour la ligne d'alimentation électrique, les amplitudes et les polarités des impulsions occasionnées par le contact à la terre des courants de phase ou de variables qui se trouvent dans une relation connue avec lesdits courants, mutuellement, et
identifier la ligne d'alimentation électrique comme défectueuse lorsque l'impulsion de courant d'une phase de ligne d'alimentation électrique est supérieure à une limite prédéterminée, supérieure relativement aux autres phases de ligne d'alimentation électrique et présente une polarité opposée aux polarités des impulsions de courant dans les autres phases de ligne d'alimentation électrique.

8. Procédé selon la revendication 1 ou 2, **caractérisé en ce que** l'étape consistant à identifier la ligne d'alimentation électrique sur laquelle le contact à la terre est rencontré, comporte les étapes ci-après consistant à :
surveiller, spécifiquement pour la ligne d'alimentation électrique, les amplitudes des impulsions occasionnées par le contact à la terre des courants de phase ou de variables qui se trouvent dans une relation connue avec lesdits courants,
comparer, spécifiquement pour la ligne d'alimentation électrique, les amplitudes des impulsions occasionnées par le contact à la terre des courants de phase ou de variables qui se trouvent dans une relation connue avec lesdits courants, mutuellement, et les amplitudes des tensions de phase ou les amplitudes de variables qui se trouvent dans une relation connue avec lesdites tensions, mutuellement, et
identifier la ligne d'alimentation électrique comme défectueuse lorsque l'impulsion de courant d'une phase de ligne d'alimentation électrique est supérieure à une limite prédéterminée, supérieure relativement aux autres phases de ligne d'alimentation électrique et lorsque la tension de ladite phase est également inférieure à la tension des autres phases.

9. Procédé selon la revendication 1 ou 2, **caractérisé en ce que** l'étape consistant à identifier la ligne d'alimentation électrique sur laquelle le contact à la terre est rencontré, comporte les étapes ci-après consistant à :
comparer les polarités des impulsions occasionnées par le contact à la terre des courants de somme des phases de ligne d'alimentation électrique ou de variables qui se trouvent dans un déphasage connu avec lesdits courants de somme, mutuellement, et
identifier la ligne d'alimentation électrique comme défectueuse lorsque la polarité du courant de somme sur la ligne d'alimentation électrique est opposée aux polarités des courants de somme sur les autres lignes d'alimentation électrique.

10. Procédé selon la revendication 1 ou 2, **caractérisé en ce que** l'étape consistant à identifier la ligne d'alimentation électrique sur laquelle le contact à la terre est rencontré, comporte les étapes ci-après consistant à :
comparer les amplitudes des impulsions occasionnées par le contact à la terre des courants de somme des phases de ligne d'alimentation électrique ou de variables qui se trouvent dans une relation connue avec lesdits courants de somme, mutuellement, et
identifier la ligne d'alimentation électrique comme défectueuse lorsque l'impulsion de courant de somme sur la ligne d'alimentation électrique est plus importante que sur les autres lignes d'alimentation électrique.

11. Procédé selon l'une quelconque des revendications 1 à 10, **caractérisé en ce que** lorsqu'une protection de secours de courant de défaut à la terre, comme, par exemple, un relais de tension nulle ou un relais de courant nul, est utilisée dans le réseau de distribution électrique, le fonctionnement de la protection de secours de courant de défaut à la terre est empêché si un nombre prédéterminé de contacts à la terre est détecté dans le réseau de distribution électrique au cours d'une période prédéterminée.

12. Procédé selon l'une quelconque des revendications 1 à 10, **caractérisé en ce que** lorsqu'une protection de secours de courant de défaut à la terre, comme, par exemple, un relais de tension nulle ou un relais de courant nul, est utilisée dans le réseau de distribution électrique, le fonctionnement de la protection de secours de courant de défaut à la terre est empêché lorsque l'amplitude de la tension nulle dans le réseau de distribution électrique ou celle du courant nul au niveau du point d'alimentation diminue de manière sensiblement exponentielle.

13. Procédé selon l'une quelconque des revendications 1 à 10, **caractérisé en ce que** lorsqu'une protection de secours de courant de défaut à la terre, comme, par exemple, un relais de tension nulle ou un relais de courant nul, est utilisée dans le réseau de distribution électrique, le fonctionnement de la protection de secours de courant de défaut à la terre est empêché lorsque la fréquence de la tension nulle dans le réseau de distribution électrique ou celle du courant nul au niveau du point d'alimentation diffère essentiellement de la fréquence nominale du réseau de distribution électrique.

14. Procédé selon l'une quelconque des revendications 1 à 13, **caractérisé en ce que** des ré-enclenchements peuvent être mis en oeuvre pour éliminer un certain courant de défaut à la terre uniquement lorsque le courant de défaut à la terre est identifié comme un courant de défaut à la terre récurrent.

15. Système destiné à protéger un réseau de distribution électrique contre des courants de défaut à la terre récurrents, lequel réseau de distribution électrique comporte un point neutre, une ou plusieurs lignes d'alimentation électrique (F1 et F2) sortant d'un point d'alimentation (S) et est de préférence un réseau triphasé (L1, L2 et L3), le système étant agencé de manière à :
détecter un contact à la terre relatif à un courant de défaut à la terre dans le réseau de distribution électrique,
identifier la ligne d'alimentation électrique (F2) sur laquelle le contact à la terre est rencontré au moyen d'impulsions de courant ou de valeurs de tension et impulsions de courant relatifs au contact à la terre, une valeur de courant étant interprétée comme une impulsion de courant au moment où la valeur instantanée du courant divisée par la valeur réelle du courant, dépasse une limite prédéterminée, **caractérisé en ce que** le système est également agencé de manière à :
calculer le nombre de contacts à la terre détectés pour chaque ligne d'alimentation électrique (F1 et F2), et
identifier qu'il existe un courant de défaut à la terre récurrent sur la ligne d'alimentation électrique (F1 ou F2) lorsque le nombre des contacts à la terre détectés pour ladite ligne d'alimentation électrique (F1 ou F2) dépasse un nombre prédéterminé au cours d'une période prédéterminée, ou lorsque le nombre des contacts à la terre détectés pour ladite ligne d'alimentation électrique (F1 ou F2) dépasse un nombre prédéterminé alors que la tension entre le point neutre du réseau de distribution électrique et la terre, c'est-à-dire, la tension nulle, demeure supérieure à une limite prédéterminée, dans laquelle ledit nombre prédéterminé est supérieur à un.

16. Système selon la revendication 15, **caractérisé en ce que** le système est agencé de manière à soustraire une valeur de 1 du nombre de contacts à la terre détectés sur une ligne d'alimentation électrique (F1 ou F2) lorsque le nombre est supérieur à zéro et lorsqu'un contact à la terre est détecté sur une autre ligne d'alimentation électrique (F1 ou F2).

17. Système selon la revendication 15 ou 16, **caractérisé en ce que**, lors de l'étape consistant à identifier la ligne d'alimentation électrique (F2) sur laquelle le contact à la terre est rencontré, le système est agencé de manière à :
identifier la phase défectueuse (L3),
comparer, spécifiquement pour la ligne d'alimentation électrique (F1 et F2), la polarité de l'impulsion occasionnée par le contact à la terre du courant dans la phase défectueuse (L3), du courant de somme des phases (L1, L2 et L3) ou d'une variable qui se trouve dans un déphasage connu avec lesdits courants, à la polarité de la valeur instantanée de la tension dans la phase défectueuse (L3) ou à la polarité d'une variable qui se trouve dans un déphasage connu avec ladite tension au moment de l'occurrence du courant de défaut à la terre, et
identifier (F1 ou F2) la ligne d'alimentation électrique comme défectueuse lorsque la polarité du courant dans la phase défectueuse (L3) ou celle du courant de somme des phases (L1, L2 et L3) est identique à la polarité de la valeur instantanée de la tension dans la phase défectueuse.

18. Système selon la revendication 15 ou 16, **caractérisé en ce que**, lors de l'étape consistant à identifier la ligne d'alimentation électrique (F2) sur laquelle le contact à la terre est rencontré, le système est agencé de manière à :
identifier la phase défectueuse (L3),
comparer, spécifiquement pour la ligne d'alimentation électrique (F1 et F2), la polarité de l'impulsion occasionnée par le contact à la terre du courant dans la phase défectueuse (L3) ou d'une variable qui se trouve dans un déphasage connu avec ledit courant, à la polarité de la modification temporaire dans la tension nulle du réseau ou dans une variable qui se trouve dans un déphasage connu avec ladite tension nulle au moment de l'occurrence du courant de défaut à la terre, et
identifier la ligne d'alimentation électrique (F1 ou F2) comme défectueuse lorsque la polarité du courant dans la phase défectueuse (L3) est opposée à la polarité de la modification temporaire dans la tension nulle du réseau.

19. Système selon la revendication 15 ou 16, **caractérisé en ce que**, lors de l'étape consistant à identifier la ligne d'alimentation électrique (F2) sur laquelle le contact à la terre est rencontré, le système est agencé de manière à :
comparer, spécifiquement pour la ligne d'alimentation électrique (F1 et F2), la polarité de l'impulsion occasionnée par le contact à la terre du courant de somme des phases (L1, L2 et L3) ou d'une variable qui se trouve dans un déphasage connu avec ledit courant de somme, à la polarité de la modification temporaire dans la tension nulle du réseau ou dans une variable qui se trouve dans un déphasage connu avec ladite tension nulle au moment de l'occurrence du courant de défaut à la terre, et
identifier la ligne d'alimentation électrique (F1 ou F2) comme défectueuse lorsque la polarité du courant de somme des phases (L1, L2 et L3) est opposée à la polarité de modification temporaire dans la tension nulle du réseau.

20. Système selon la revendication 15 ou 16, **caractérisé en ce que**, lors de l'étape consistant à identifier la ligne d'alimentation électrique (F2) sur laquelle le contact à la terre est rencontré, le système est agencé de manière à :
surveiller, spécifiquement pour la ligne d'alimentation électrique (F1 et F2), les amplitudes des impulsions occasionnées par le contact à la terre des courants de phase (L1, L2 et L3) ou de variables qui se trouvent dans une relation connue avec lesdits courants, et
comparer, spécifiquement pour la ligne d'alimentation électrique (F1 et F2), les amplitudes des impulsions occasionnées par le contact à la terre des courants de phase (L1, L2 et L3) ou de variables qui se trouvent dans une relation connue avec lesdits courants, mutuellement, et
identifier la ligne d'alimentation électrique (F1 ou F2) comme défectueuse lorsque l'impulsion de courant dans une phase de ligne d'alimentation électrique (L1, L2 ou L3) est supérieure à une limite prédéterminée et supérieure relativement aux autres phases de ligne d'alimentation électrique (L1, L2 ou L3).

21. Système selon la revendication 15 ou 16, **caractérisé en ce que**, lors de l'étape consistant à identifier la ligne d'alimentation électrique (F2) sur laquelle le contact à la terre est rencontré, le système est agencé de manière à :
surveiller, spécifiquement pour la ligne d'alimentation électrique (F1 et F2), les amplitudes des impulsions occasionnées par le contact à la terre des courants de phase (L1, L2 et L3) ou de variables qui se trouvent dans une relation connue avec lesdits courants,
comparer, spécifiquement pour la ligne d'alimentation électrique (F1 et F2), les amplitudes et les polarités des impulsions occasionnées par le contact à la terre des courants de phase (L1, L2 et L3) ou de variables qui se trouvent dans une relation connue avec lesdits courants, mutuellement, et
identifier la ligne d'alimentation électrique (F1 ou F2) comme défectueuse lorsque l'impulsion de courant dans une phase de ligne d'alimentation électrique (L1, L2 ou L3) est supérieure à une limite prédéterminée, supérieure relativement aux autres phases de ligne d'alimentation électrique (L1, L2 ou L3) et présente une polarité opposée aux polarités des impulsions de courant dans les autres phases de ligne d'alimentation électrique.

22. Système selon la revendication 15 ou 16, **caractérisé en ce que**, lors de l'étape consistant à identifier la ligne d'alimentation électrique (F2) sur laquelle le contact à la terre est rencontré, le système est agencé de manière à :
surveiller, spécifiquement pour la ligne d'alimentation électrique (F1 et F2), les amplitudes des impulsions occasionnées par le contact à la terre des courants de phase (L1, L2 et L3) ou de variables qui se trouvent dans une relation connue avec lesdits courants,
comparer, spécifiquement pour la ligne d'alimentation électrique (F1 et F2), les amplitudes des impulsions occasionnées par le contact à la terre des courants de phase (L1, L2 et L3) ou de variables qui se trouvent dans une relation connue avec lesdits courants, mutuellement, et les amplitudes des tensions de phase ou les amplitudes de variables qui se trouvent dans une relation connue avec lesdites tensions, mutuellement, et
identifier la ligne d'alimentation électrique (F1 ou F2) comme défectueuse lorsque l'impulsion de courant dans une phase de ligne d'alimentation électrique (L1, L2 ou L3) est supérieure à une limite prédéterminée, supérieure relativement aux autres phases de ligne d'alimentation électrique et lorsque la tension de ladite phase est également inférieure à la tension dans les autres phases.

23. Système selon la revendication 15 ou 16, **caractérisé en ce que**, lors de l'étape consistant à identifier la ligne d'alimentation électrique (F2) sur laquelle le contact à la terre est rencontré, le système est agencé de manière à :
comparer les polarités des impulsions occasionnées par le contact à la terre des courants de somme des phases (L1, L2 et L3) de ligne d'alimentation électrique (F1 et F2) ou de variables qui se trouvent dans un déphasage connu avec lesdits courants de somme, mutuellement, et
identifier la ligne d'alimentation électrique (F1 ou F2) comme défectueuse lorsque la polarité du courant de somme sur la ligne d'alimentation électrique est opposée aux polarités des courants de somme sur les autres lignes d'alimentation électrique.

24. Système selon la revendication 15 ou 16, **caractérisé en ce que**, lors de l'étape consistant à identifier la ligne d'alimentation électrique (F2) sur laquelle le contact à la terre est rencontré, le système est agencé de manière à :
comparer les amplitudes des impulsions occasionnées par le contact à la terre des courants de somme des phases (L1, L2 et L3) de ligne d'alimentation électrique (F1 et F2) ou de variables qui se trouvent dans une relation connue avec lesdits courants de somme, mutuellement, et
identifier la ligne d'alimentation électrique (F1 ou F2) comme défectueuse lorsque l'impulsion de courant de somme sur la ligne d'alimentation électrique est plus importante que sur les autres lignes d'alimentation électrique.

25. Système selon l'une quelconque des revendications 15 à 24, **caractérisé en ce que**, lorsque le réseau de distribution électrique comporte une protection de secours de courant de défaut à la terre, comme, par exemple, un relais de tension nulle ou un relais de courant nul, le système est agencé de manière à empêcher le fonctionnement de la protection de secours de courant de défaut à la terre lorsqu'au moins un nombre prédéterminé de contacts à la terre est détecté dans le réseau de distribution électrique au cours d'une période prédéterminée.

26. Système selon l'une quelconque des revendications 15 à 24, **caractérisé en ce que** lorsque le réseau de distribution électrique comporte une protection de secours de courant de défaut à la terre, comme, par exemple, un relais de tension nulle ou un relais de courant nul, le système est agencé de manière à empêcher le fonctionnement de la protection de secours de courant de défaut à la terre lorsque l'amplitude de la tension nulle dans le réseau de distribution électrique ou celle du courant nul au niveau du point d'alimentation (S) diminue sensiblement de manière exponentielle.

27. Système selon l'une quelconque des revendications 15 à 24, **caractérisé en ce que** lorsque le réseau de distribution électrique comporte une protection de secours de courant de défaut à la terre, comme, par exemple, un relais de tension nulle ou un relais de courant nul, le système est agencé de manière à empêcher le fonctionnement de la protection de secours de courant de défaut à la terre lorsque la fréquence de la tension nulle dans le réseau de distribution électrique ou celle du courant nul au niveau du point d'alimentation (S) diffère sensiblement de la fréquence nominale du réseau de distribution électrique.

28. Système selon l'une quelconque des revendications 15 à 27, **caractérisé en ce que** le système est agencé de manière à permettre des ré-enclenchements pour éliminer un certain courant de défaut à la terre uniquement lorsqu'il identifie que le courant de défaut à la terre est un courant de défaut à la terre récurrent.

29. Dispositif de détection destiné à indiquer la direction de l'emplacement du courant de défaut à la terre récurrent dans un réseau de distribution électrique lequel comporte un point neutre, une ou plusieurs lignes d'alimentation électrique (F1 et F2) sortant d'un point d'alimentation (S) et est de préférence un réseau triphasé (L1, L2 et L3), le dispositif de détection étant localisé au niveau d'un certain point du réseau de distribution électrique et agencé de manière à :
détecter un contact à la terre relatif à un courant de défaut à la terre dans le réseau de distribution électrique,
identifier, au moyen d'impulsions de courant ou de valeurs de tension et impulsions de courant relatifs au contact à la terre, si le contact à la terre est rencontré dans la direction du point d'alimentation (S) du réseau de distribution électrique, c'est-à-dire dans la direction en amont, par rapport au dispositif ou dans l'autre direction, c'est-à-dire dans la direction en aval, une valeur de courant étant interprétée comme une impulsion de courant au moment où la valeur instantanée du courant divisée par la valeur réelle du courant dépasse une limite prédéterminée, **caractérisé en ce que** le dispositif est également agencé de manière à
calculer le nombre de contacts à la terre détectés pour lesdites deux directions, et
indiquer qu'il existe un courant de défaut à la terre récurrent dans une certaine direction lorsque le nombre des contacts à la terre détectés pour ladite direction dépasse un nombre prédéterminé au cours d'une période prédéterminée, ou lorsque le nombre des courants de défaut à la terre détectés pour ladite direction dépasse un nombre prédéterminé alors que la tension entre le point neutre du réseau de distribution électrique et la terre, c'est-à-dire la tension nulle, demeure supérieure à une limite prédéterminée dans laquelle ledit nombre prédéterminé est supérieur à un.

30. Dispositif selon la revendication 29, **caractérisé en ce que** le dispositif est agencé de manière à soustraire une valeur de 1 du nombre de contacts à la terre détectés dans une certaine direction lorsque le nombre est supérieur à zéro et lorsqu'un contact à la terre est détecté dans l'autre direction.

31. Dispositif selon la revendication 29 ou 30, **caractérisé en ce que**, lors de l'étape consistant à identifier la direction dans laquelle le contact à la terre est rencontré, le dispositif est agencé de manière à :
identifier la phase défectueuse (L3),
comparer la polarité de l'impulsion occasionnée par le contact à la terre du courant dans la phase défectueuse (L3), du courant de somme des phases (L1, L2 et L3) ou d'une variable qui se trouve dans un déphasage connu avec lesdits courants, à la polarité de la valeur instantanée de la tension dans la phase défectueuse (L3) ou à la polarité d'une variable qui se trouve dans un déphasage connu avec ladite tension au moment de l'occurrence du courant de défaut à la terre, et
identifier que le défaut se situe dans la direction en aval du dispositif lorsque la polarité du courant dans la phase défectueuse (L3) ou celle du courant de somme des phases est identique à la polarité de la valeur instantanée de la tension dans la phase défectueuse, et que, dans le cas contraire, le défaut se situe dans la direction en amont du dispositif.

32. Dispositif selon la revendication 29 ou 30, **caractérisé en ce que**, lors de l'étape consistant à identifier la direction dans laquelle le contact à la terre est rencontré, le dispositif est agencé de manière à :
identifier la phase défectueuse (L3),
comparer la polarité de l'impulsion occasionnée par le contact à la terre du courant dans la phase défectueuse (L3) ou d'une variable qui se trouve dans un déphasage connu avec ledit courant, à la polarité de la modification temporaire dans la tension nulle du réseau ou dans une variable qui se trouve dans un déphasage connu avec ladite tension nulle au moment de l'occurrence du courant de défaut à la terre ; et
identifier que le défaut se situe dans la direction en aval du dispositif lorsque la polarité du courant dans la phase défectueuse (L3) est opposée à la polarité de la modification temporaire dans la tension nulle du réseau, et que, dans le cas contraire, le défaut se situe dans la direction en amont du dispositif.

33. Dispositif selon la revendication 29 ou 30, **caractérisé en ce que**, lors de l'étape consistant à identifier la direction dans laquelle le contact à la terre est rencontré, le dispositif est agencé de manière à :
comparer la polarité de l'impulsion occasionnée par le contact à la terre du courant de somme des phases (L1, L2 et L3) ou d'une variable qui se trouve dans un déphasage connu avec ledit courant de somme, à la polarité de la modification temporaire dans la tension nulle du réseau ou dans une variable qui se trouve dans un déphasage connu avec ladite tension nulle au moment de l'occurrence du courant de défaut à la terre, et
identifier que le défaut se situe dans la direction en aval du dispositif lorsque la polarité du courant de somme des phases (L1, L2 et L3) est opposée à la polarité de la modification temporaire dans la tension nulle du réseau, et que, dans le cas contraire, le défaut se situe dans la direction en amont du dispositif.

34. Dispositif selon la revendication 29 ou 30, **caractérisé en ce que**, lors de l'étape consistant à identifier la direction dans laquelle le contact à la terre est rencontré, le dispositif est agencé de manière à :
surveiller les amplitudes des impulsions occasionnées par le contact à la terre des courants de phase (L1, L2 et L3) ou de variables qui se trouvent dans une relation connue avec lesdits courants, et
comparer les amplitudes des impulsions occasionnées par le contact à la terre des courants de phase (L1, L2 et L3) ou de variables qui se trouvent dans une relation connue avec lesdits courants, mutuellement, et
identifier que le défaut se situe dans la direction en aval du dispositif lorsque l'impulsion de courant dans une phase (L1, L2 ou L3) est supérieure à une limite prédéterminée et supérieure relativement aux autres phases, et que, dans le cas contraire, le défaut se situe dans la direction en amont du dispositif.

35. Dispositif selon la revendication 29 ou 30, **caractérisé en ce que**, lors de l'étape consistant à identifier la direction dans laquelle le contact à la terre est rencontré, le dispositif est agencé de manière à :
surveiller les amplitudes des impulsions occasionnées par un contact à la terre des courants de phase (L1, L2 et L3) ou de variables qui se trouvent dans une relation connue avec lesdits courants,
comparer les amplitudes et les polarités des impulsions occasionnées par le contact à la terre des courants de phase (L1, L2 et L3) ou de variables qui se trouvent dans une relation connue avec lesdits courants, mutuellement, et
identifier que le défaut se situe dans la direction en aval du dispositif lorsque l'impulsion de courant dans un phase (L1, L2 ou L3) est supérieure à une limite prédéterminée, supérieure relativement aux autres phases et présente une polarité opposée aux polarités des impulsions de courant dans les autres phases, et que, dans le cas contraire, le défaut se situe dans la direction en amont du dispositif.

36. Dispositif selon la revendication 29 ou 30, **caractérisé en ce que**, lors de l'étape consistant à identifier la direction dans laquelle le contact à la terre est rencontré, le dispositif est agencé de manière à :
surveiller les amplitudes des impulsions occasionnées par le contact à la terre des courants de phase (L1, L2 et L3) ou de variables qui se trouvent dans une relation connue avec lesdits courants,
comparer les amplitudes des impulsions occasionnées par le contact à la terre des courants de phase (L1, L2 et L3) ou de variables qui se trouvent dans une relation connue avec lesdits courants, mutuellement, et les amplitudes des tensions de phase ou les amplitudes de variables qui se trouvent dans une relation connue avec lesdites tensions, mutuellement, et
identifier que le défaut se situe dans la direction en aval du dispositif lorsque l'impulsion de courant dans une phase (L1, L2 ou L3) est supérieure à une limite prédéterminée, supérieure relativement aux autres phases et lorsque la tension de ladite phase est également inférieure à la tension dans les autres phases, et que, dans le cas contraire, le défaut se situe dans la direction en amont du dispositif.
